# EUROPEAN PATENT APPLICATION

(11) **EP 4 773 213 A1**
(43) Date of publication of application: **08.07.2026**
(21) Application number: 25226258.9
(22) Date of filing: 22.12.2025
(51) Int. Cl.: H01M 4/134, H01M 4/38, H01M 10/052

(54) **METHOD FOR PRODUCING ELECTRODE MATERIAL AND ELECTRODE MATERIAL**

(30) Priority: 29.12.2024 JP 2024233217; 30.09.2025 JP 2025163573
(71) Applicant: Daido Steel Co., Ltd., Nagoya-shi Aichi 461-8581 (JP)
(72) Inventor: MUKAI, Takashi, Izumi-shi, Osaka 594-1157 (JP); SAKAMOTO, Taichi, Izumi-shi, Osaka 594-1157 (JP); IKEUCHI, Yuta, Izumi-shi, Osaka 594-1157 (JP); YAMASHITA, Naoto, Izumi-shi, Osaka 594-1157 (JP); KIMURA, Yuta, Nagoya-shi, Aichi 457-8545 (JP); HAMADA, Yuki, Nagoya-shi, Aichi 457-8545 (JP)
(74) Representative: Diehl & Partner

(57) **Abstract**

A method for producing an electrode material, which is a non-aqueous electrolyte secondary battery electrode material, the method including a granulation step that includes: obtaining a mixed liquid by mixing an inorganic binder aqueous solution containing an inorganic binder that contains a phosphate as a component, and a suspension liquid in which an active material is dispersed in an organic solvent; subjecting the mixed liquid to a heat treatment to vaporize water in the mixed liquid; obtaining a granulated body containing the inorganic binder and the active material, in which the inorganic binder aqueous solution has a solid content concentration of 1 mass% or more and 30 mass% or less.

## Description

### TECHNICAL FIELD

The present invention relates to a method for producing an electrode material and an electrode material, and more particularly to a method for producing a non-aqueous electrolyte secondary battery electrode material and a non-aqueous electrolyte secondary battery electrode material.

### BACKGROUND ART

In the related art, in an electrode material for a non-aqueous secondary battery represented by a lithium ion battery, there is known a technique of combining active material particles such as Si particles with a binder to form a granulated body for the purpose of increasing a capacity and improving cycle characteristics (for example, Patent Literature 1). In addition, as a method of forming Si particles into fine particles, there is known a wet pulverization method of pulverizing a suspension liquid in which Si particles are dispersed by using a bead mill (for example, Patent Literature 2).
Patent Literature 1: JP2013-235682A
Patent Literature 2: JP2020-17389A

### SUMMARY OF INVENTION

When forming a granulated body from active material particles such as Si particles using a wet pulverization method, the active material particles are dispersed to form a suspension liquid, and as a dispersion medium used in the suspension liquid, a material having fluidity, including a liquid such as water or an organic solvent, is used. In the case where the dispersion medium is water and the active material is an alloy-based material or a material that may react with water, hydrogen may be generated as the active material is dispersed in the dispersion medium. The same problem may occur when water as a solvent or a dispersion medium is used in a binder. Therefore, when a binder (aqueous binder) using water as a solvent or a dispersion medium is used for the alloy-based material, water is decomposed to generate a hydrogen gas, which is very difficult to handle, and it is difficult to obtain a uniform electrode. In addition, simultaneously with the generation of hydrogen, an oxide film that causes a decrease in capacity and an increase in internal resistance is likely to be formed on a surface of the alloy-based material. The generation of hydrogen and the formation of the oxide film occur, for example, according to the following formula 1.

Si + 2H₂O → SiO₂ + 2H₂↑ Formula 1

In order to prevent the generation of hydrogen, an organic solvent may be selected as the dispersion medium. Examples of the organic solvent include various solvents such as a hydrocarbon-based organic solvent, an alcohol-based organic solvent, a ketone-based organic solvent, an ester-based organic solvent, a glycol-based organic solvent, a glycol ether-based organic solvent, a halogen-based organic solvent, and a nitrogen-based organic solvent. An alcohol-based organic solvent is preferred considering that alteration of the active material and the generation of hydrogen can be prevented, that there is little influence on the human body and the environment, and that a material cost is low.

A specific example of a method for preparing an electrode active material composed of Si particles using an alcohol-based solvent as the dispersion medium includes a method in which a mixture containing a Si powder having a median diameter (D₅₀) of 5 µm and ethanol is charged into a bead mill (zirconia beads having a diameter of 20 µm) and treated for 10 minutes to easily produce a suspension liquid in which Si having a median diameter (D₅₀) of 300 nm is dispersed. In this case, corresponding to the use of ethanol as the dispersion medium, no generation of hydrogen from the suspension liquid is observed, and it is considered that an oxidation reaction of Si as in the formula 1 does not proceed. Note that, when ethanol is replaced with water, Si can be pulverized, but a large amount of hydrogen is generated from the suspension liquid.

The granulated body containing the active material and the granulation binder can be produced by mixing the granulation binder and an active material powder obtained by removing ethanol as the dispersion medium from the suspension liquid containing ethanol and Si particles obtained above, and then drying the mixture. However, this method requires a step of removing the dispersion medium from the suspension liquid to produce the active material powder before a granulation step, which increases the number of production steps.

If the granulated body can be produced by directly adding the granulation binder to the suspension liquid, the granulated body can be efficiently produced without performing the step of removing the organic solvent as the dispersion medium. However, in this case, it is necessary that the granulation binder to be used does not generate hydrogen and does not lose fluidity and a binder function even when coming into contact with the organic solvent contained in the suspension liquid.

In view of the above, an object of the present invention is to provide a method for producing an electrode material which is capable of efficiently and safely producing a granulated body containing an active material while preventing generation of hydrogen using a suspension liquid obtained by dispersing the active material in an organic solvent, and an electrode material capable of being produced in this manner.

In order to solve the above problems, a method for producing an electrode material and an electrode material according to the present invention have the following configurations.
[1] A method for producing an electrode material, which is a non-aqueous electrolyte secondary battery electrode material, the method including a granulation step that includes:
   obtaining a mixed liquid by mixing an inorganic binder aqueous solution containing an inorganic binder that contains a phosphate as a component, and a suspension liquid in which an active material is dispersed in an organic solvent;
   subjecting the mixed liquid to a heat treatment to vaporize water in the mixed liquid;
   obtaining a granulated body containing the inorganic binder and the active material, in which
   the inorganic binder aqueous solution has a solid content concentration of 1 mass% or more and 30 mass% or less.
[2] The method for producing an electrode material according to the above [1], in which the phosphate includes an aluminum phosphate represented by a condensed formula Al₂O₃·nP₂O₅·mH₂O (0.5 ≤ n ≤ 4 and 0 ≤ m ≤ 8).
[3] The method for producing an electrode material according to the above [1] or [2], in which
   the suspension liquid has a solid content concentration of 1 mass% or more and 30 mass% or less,
   the suspension liquid further contains water, and
   a concentration of water with respect to the organic solvent in the suspension liquid is 10 mass% or more.
[4] The method for producing an electrode material according to any one of the above [1] to [3], in which the organic solvent is a water-soluble organic solvent.
[5] The method for producing an electrode material according to the above [4], in which the water-soluble organic solvent is an alcohol-based organic solvent.
[6] The method for producing an electrode material according to any one of [1] to [5], in which the mixed liquid is subjected to the heat treatment under a condition of 100°C or higher and 500°C or lower.
[7] The method for producing an electrode material according to any one of [1] to [6], in which the active material contains single particles having a median diameter (D₅₀) of 10 nm or more and 1 µm or less.
[8] The method for producing an electrode material according to any one of the above [1] to [7], in which the active material contains a material capable of forming an alloy phase with an alkali metal.
[9] The method for producing an electrode material according to the above [8], in which the material capable of forming the alloy phase with the alkali metal is a Si-based material.
[10] The method for producing an electrode material according to any one of the above [1] to [9], in which the mixed liquid further contains carbon.
[11] The method for producing an electrode material according to any one of the above [1] to [10], in which the granulated body is spherical and has a median diameter (D₅₀) of 0.5 µm or more and 50 µm or less.
[12] The method for producing an electrode material according to any one of [1] to [11], in which the heat treatment comprises a spray drying method.
[13] An electrode material, which is a non-aqueous electrolyte secondary battery electrode material, in which
   the electrode material is a granulated body containing an active material and an inorganic binder that contains a phosphate as a component, and
   the inorganic binder is contained in an amount of 1 mass% or more and 30 mass% or less.
[14] The electrode material according to the above [13], in which the phosphate contains an aluminum phosphate represented by a condensed formula Al₂O₃·nP₂O₅·mH₂O (0.5 ≤ n ≤ 4 and 0 ≤ m ≤ 8).
[15] The electrode material according to the above [13] or [14], in which the active material contains a Si-based material.
[16] The electrode material according to the above [15], in which the Si-based material contains Si particles and SiX compound particles, where X is at least one element selected from Fe, Co, Ni, Zr, Ti, Cr, V, and Nb.
[17] The electrode material according to the above [16], in which
   in the active material, a mass proportion of the Si particles is 10% or more and 90% or less, and a mass proportion of the SiX compound particles is 5% or more and 90% or less.
[18] The electrode material according to the above [17], in which
   in the active material, the mass proportion of the Si particles is 20% or more and 50% or less, and the mass proportion of the SiX compound particles is 30% or more and 85% or less.
[19] The electrode material according to any one of the above [16] to [18], in which the Si-based material further contains YCu compound particles, where Y is at least one element selected from Sn, Al, In, and Bi.

In the method for producing an electrode material according to the present invention having the above configuration [1], an inorganic binder aqueous solution containing an inorganic binder, and a suspension liquid in which an active material is dispersed in an organic solvent are directly mixed, and the mixed liquid is subjected to a heat treatment to obtain a granulated body containing the inorganic binder and the active material. Since a step of removing the organic solvent constituting the suspension liquid is not required, the electrode material can be efficiently produced. Here, since the inorganic binder containing the phosphate as a component is used, it is possible to prevent oxidation of the active material and generation of hydrogen in the process of producing the electrode material. Therefore, the production of the granulated body can be safely advanced. Here, since the solid content concentration in the inorganic binder aqueous solution is set to 1 mass% or more, a high effect of preventing the generation of hydrogen and improving mechanical strength of the granulated body to be produced can be obtained. In addition, since the concentration is set to 30 mass% or less, aggregation or precipitation of the phosphate in the inorganic binder aqueous solution is less likely to occur, and a homogeneous granulated body is likely to be produced. Further, the electrode material obtained by this production method has excellent flame resistance and is less likely to generate hydrogen due to contact with water. In addition, a non-aqueous electrolyte secondary battery using this electrode material has excellent cycle characteristics, can be stably operated in a high-temperature environment, and has a small electrode resistance. In addition, thermal runaway of the battery is less likely to occur, and safety is also improved.

In the aspect of the above [2], the phosphate contains an aluminum phosphate represented by a condensed formula Al₂O₃·nP₂O₅·mH₂O having predetermined m and n. In this case, a granulated body having high mechanical strength can be obtained, and the flame resistance is also improved.

In the aspect of the above [3], the solid content concentration in the suspension liquid is 1 mass% or more and 30 mass% or less, the suspension liquid further contains water, and the concentration of water with respect to the organic solvent in the suspension liquid is 10 mass% or more. Since the suspension liquid contains water in the above range in addition to the organic solvent, the suspension liquid and the inorganic binder aqueous solution are easily mixed, and the aggregation or the precipitation of the inorganic binder is less likely to occur.

In the aspect of the above [4], the organic solvent is a water-soluble organic solvent. In this case, the suspension liquid and the inorganic binder aqueous solution are less likely to be separated. Further, in the aspect of the above [5], the water-soluble organic solvent is an alcohol-based organic solvent, and in this case, volatility of the solvent is to an appropriate extent, and the influence on the environment and the human body is reduced.

In the aspect of the above [6], the heat treatment is performed at 100°C or higher and 500°C or lower. In this case, thanks to curing the phosphate by drying, the mechanical strength of the granulated body is effectively improved, and dephosphorylation due to excessive heating is prevented.

In the aspect of the above [7], the active material contains single particles having a median diameter (D₅₀) of 10 nm or more and 1 µm or less. In this case, in a battery formed using the electrode material according to the present invention, excellent cycle characteristics and output characteristics are likely to be obtained.

In the aspect of the above [8], the active material contains a material capable of forming an alloy phase with an alkali metal. Further, in the aspect of the above [9], a Si-based material is used as a material capable of forming an alloy phase with an alkali metal. In these cases, a large theoretical capacity can be obtained in a non-aqueous electrolyte secondary battery formed using the produced electrode material.

In the aspect of the above [10], the mixed liquid further contains carbon. In this case, in addition to the active material and the inorganic binder, carbon that functions as a conductive additive is contained in the granulated body to be obtained, and conductivity of the granulated body can be improved.

In the aspect of the above [11], a spherical granulated body having a median diameter (D₅₀) of 0.5 µm or more and 50 µm or less is obtained. In this case, by forming the granulated body into a spherical shape, when forming an electrode from the electrode material, a density is likely to be increased, and non-uniform charging and discharging is likely to be avoided. In addition, when the granulated body has the above particle diameter, handleability of a granulated body powder is improved, and a uniform electrode is likely to be produced.

In the aspect of the above [12], the heat treatment includes a spray drying method. In this case, a spherical granulated body is likely to be obtained, and the particle diameter of the granulated body is also likely to be controlled.

The electrode material according to the present invention having the above configuration of [13] is formed as a granulated body containing an active material and an inorganic binder that contains a phosphate as a component, and a content of the inorganic binder is 1 mass% or more and 30 mass% or less. The electrode material can be suitably produced by the production method according to any one of the above [1] to [12]. Therefore, the electrode material according to the present invention can be efficiently produced using a suspension liquid in which an active material is dispersed in an organic solvent, and oxidation of the active material and generation of hydrogen are prevented in the production steps. In addition, the electrode material has excellent flame resistance and is less likely to generate hydrogen due to contact with water. Further, a non-aqueous electrolyte secondary battery using this electrode material has excellent cycle characteristics, can be stably operated in a high-temperature environment, and has a small electrode resistance. In addition, thermal runaway of the battery is less likely to occur, and safety is also improved.

In the aspect of the above [14], since the phosphate contained in the granulated body contains an aluminum phosphate represented by a condensed formula Al₂O₃·nP₂O₅·mH₂O having predetermined m and n, the mechanical strength and the flame resistance of the granulated body are improved.

In the aspect of the above [15], since the active material contains a Si-based material, a large theoretical capacity can be obtained in a non-aqueous electrolyte secondary battery formed using the electrode material.

Further, in the aspect of the above [16], since the Si-based material contains Si particles and SiX compound particles, high cycle characteristics can be obtained in a non-aqueous electrolyte secondary battery formed using the electrode material. In particular, in the aspects of the above [17] and [18], when the mass proportion of the Si particles and the SiX compound particles in the active material are set to predetermined ranges, high cycle characteristics and high discharging characteristics can be obtained.

In the aspect of the above [19], since the Si-based material further contains YCu compound particles, an effect of improving the cycle characteristics is particularly improved.

### BRIEF DESCRIPTION OF DRAWINGS

FIG. 1 is a schematic diagram illustrating a method for producing an electrode material according to an embodiment of the present invention. The inside of a broken line is an enlarged view of a granulated body.
FIG. 2 is a surface scanning electron microscope (SEM) image of an electrode mixture layer in Example 1.
FIG. 3 is a surface SEM image of an electrode mixture layer in Example 2.
FIG. 4 is a surface SEM image of an electrode mixture layer in Example 3.
FIG. 5 is a surface SEM image of an electrode mixture layer in Example 4.
FIG. 6 is a surface SEM image of an electrode mixture layer in Example 5.
FIG. 7 is a surface SEM image of an electrode mixture layer in Example 6.
FIG. 8 is a surface SEM image of an electrode mixture layer in Comparative Example 1.
FIG. 9 is a surface SEM image of an electrode mixture layer in Comparative Example 2.
FIG. 10 is a differential scanning calorimetry (DSC) curve for Example 1.
FIG. 11 is a DSC curve for Example 2.
FIG. 12 is a DSC curve for Example 3.
FIG. 13 is a DSC curve for Example 4.
FIG. 14 is a DSC curve for Example 5.
FIG. 15 is a DSC curve for Example 6.
FIG. 16 is a DSC curve for Comparative Example 1.
FIG. 17 is a DSC curve for Comparative Example 2.

### DESCRIPTION OF EMBODIMENTS

Hereinafter, a method for producing an electrode material according to an embodiment of the present invention and an electrode material according to an embodiment of the present invention are described in detail.

### [1] Outline of Method for Producing Electrode Material and Electrode Material

The method for producing an electrode material according to the embodiment of the present invention is a method for producing a non-aqueous electrolyte secondary battery electrode material. The electrode material according to the embodiment of the present invention is a non-aqueous electrolyte secondary battery electrode material, and can be produced by the above production method. With the method for producing an electrode material according to the embodiment of the present invention described below, it is possible to efficiently produce an electrode material composed of a granulated body containing an active material, and to prevent oxidation of the active material and generation of hydrogen in the process of producing the electrode material.

Note that, in the present description, the granulated body means secondary particles obtained by forming and combining an active material as a raw material (single particles) and a granulation binder to be larger than the active material raw material (single particles). The active material refers to an electrode active material, and means a substance capable of reversibly causing a chemical change by charging and discharging, and occluding or releasing a carrier. The granulation binder is a material having a property of binding active materials to each other and improving mechanical strength of the granulated body.

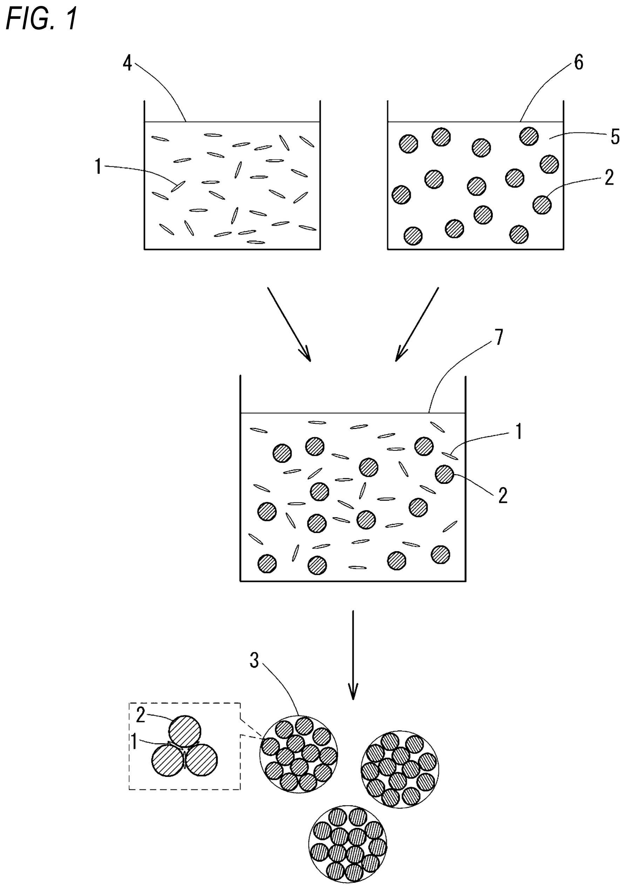

In the method for producing an electrode material according to the present embodiment, as schematically illustrated in FIG. 1, as a granulation step, an inorganic binder aqueous solution 4 containing an inorganic binder 1 that contains a phosphate (for example, Al₂O₃·3P₂O₅) as a component, and a suspension liquid 6 in which an active material 2 is dispersed in an organic solvent 5 are mixed, and then a heat treatment is performed on a mixed liquid 7 using a spray dryer, for example. With the heat treatment, a granulated body 3 containing the inorganic binder 1 that contains the phosphate as a component, the active material 2, and optionally a conductive additive is prepared. Hereinafter, specific raw materials and the like are described in order. The production method according to the present embodiment does not include a step of removing the organic solvent 5 from the suspension liquid 6 before preparing the mixed liquid 7.

### [2] Suspension Liquid Containing Active Material

In this production method, as described above, a suspension liquid in which the active material is dispersed in the organic solvent as a dispersion medium is used as a raw material for producing the electrode material. The dispersion medium used in the suspension liquid is an organic solvent. This is because a surface of the active material is less likely to be oxidized and the active material is less likely to be altered by using the organic solvent. Then, the suspension liquid containing the organic solvent and the active material and an inorganic binder aqueous solution containing a phosphate as a component are mixed, followed by drying, whereby the active material and the inorganic binder are combined to obtain a granulated body. By using the organic solvent, in an electrode using the electrode material to be produced, it is possible to prevent a decrease in reversible capacity due to the alteration of the active material and to prevent an increase in resistance, and it is possible to prevent the generation of hydrogen in the step of producing the electrode material. The suspension liquid can be suitably prepared by a wet pulverization method using a bead mill or the like.

The active material contained in the suspension liquid is not particularly limited as long as it is an active material used in a non-aqueous electrolyte secondary battery. For example, in the case of a lithium-ion battery, the active material is not particularly limited as long as it can occlude and release lithium ions used. Examples of such an active material include known active materials including an alkali metal/transition metal composite oxide-based active material, a vanadium-based active material, a sulfur-based active material, a solid solution-based active material (lithium-rich, sodium-rich, and potassium-rich active materials), a carbon-based active material, an organic-based active material, graphite, hard carbon, soft carbon, lithium titanate, an alloy-based material, and a conversion material. These active materials may be used alone or in combination of two or more kinds thereof. From the viewpoint of a large theoretical capacity, it is preferable to use a material capable of forming an alloy phase with an alkali metal, in particular, an alloy-based material such as a tin (Sn)-based material, a silicon (Si)-based material, an aluminum (Al)-based material, a germanium (Ge)-based material, or a silver (Ag)-based material. Among them, a Si-based material such as Si, SiOₓ (x is a real number of 0.3 or more and 1.4 or less), or a Si-M alloy having a high capacity is preferred. That is, the active material preferably contains particles containing Si. The Si-M alloy may be any of a complete solid solution alloy, a eutectic alloy, a hypoeutectic alloy, a hypereutectic alloy, and a peritectic alloy, and M is a metal element, and examples thereof include iron (Fe), nickel (Ni), cobalt (Co), chromium (Cr), yttrium (Y), aluminum (Al), vanadium (V), tin (Sn), manganese (Mn), zirconium (Zr), titanium (Ti), copper (Cu), niobium (Nb), and molybdenum (Mo). A surface of the active material particles may be coated with a material having excellent electron conductivity such as carbon or ceramics.

As a preferred specific example of the form in which the Si-based material constituting the active material contains the Si-M alloy, includes a form in which the Si-based material contains Si particles and SiX compound particles. Here, the element X is at least one element selected from Fe, Co, Ni, Zr, Ti, Cr, V, and Nb. All of the elements X are elements capable of forming a compound (silicide) with Si. The element X preferably contains at least Fe. The Si particles may contain, as a main component, only Si except for inevitable impurities or an alloy in which the element X is dissolved in Si. Si preferably accounts for 95 mass% or more of the Si particles. The SiX compound particles may contain, as a main component, an intermetallic compound of Si and the element X. The SiX intermetallic compound preferably accounts for 95 mass% or more of the SiX compound particles. When the Si-based material constituting the active material contains the SiX compound particles in addition to the Si particles, the electrode material has excellent cycle characteristics. This is because the SiX compound particles are less likely to cause a volume change during charging and discharging.

Content proportions of the Si particles and the SiX compound particles in the active material are not particularly limited. A mass proportion of the Si particles (the proportion of the mass to the entire active material) is preferably in a range of 10% or more and 90% or less, and a mass proportion of the SiX compound particles is preferably in a range of 5% or more and 90% or less. Then, a high effect of improving the cycle characteristics can be obtained. In addition, the electrode material exhibits high discharging characteristics. That is, a high discharge capacity is exhibited even in high rate discharging. In particular, the mass proportion of the Si particles is more preferably in a range of 20% or more and 50% or less and the mass proportion of the SiX compound particles is more preferably in a range of 30% or more and 85% or less. In the case where the mass proportions are within the above-mentioned ranges, the effect of improving the discharging characteristics is improved. Further, the mass proportion of the Si particles is still preferably in a range of 25% or more and 40% or less, and the mass proportion of the SiX compound particles is still preferably in a range of 55% or more and 75% or less.

In the case where the Si-based material of the active material contains the Si particles and the SiX compound particles, the Si-based material may further contain YCu compound particles. Here, the element Y is at least one element selected from Sn, Al, In, and Bi. Any element Y does not form a compound with Si, but can form a compound with copper (Cu). The element Y preferably contains at least Sn. The YCu compound particles contain, as a main component, an intermetallic compound of the element Y and Cu. The YCu intermetallic compound preferably accounts for 95 mass% or more of the YCu compound particles. When the Si-based material constituting the active material contains the YCu compound particles in addition to the Si particles and the SiX compound particles, the effect of improving the cycle characteristics is further improved. This is because the YCu compound particles exhibit a buffering effect of reducing a difference in volume expansion coefficient between the Si particles and the SiX compound particles. A content of the YCu compound particles in the active material is not particularly limited, and a mass proportion of the YCu compound particles in the active material is preferably in a range of 0.1% or more and 1% or less.

In the case where the Si-based material contains the Si particles, the SiX compound particles, and if necessary, the YCu compound particles, the Si particles, the SiX compound particles, and the YCu compound particles each constitute independent particles. Then, a mixture of these particles is combined and bound to each other by a phosphate-based inorganic binder to form a granulated body.

In order to produce the active material containing the Si-based material, for example, a Si alloy powder may be prepared by using an atomization method such as gas atomization. By producing a powder of an alloy containing Si and, if necessary, a metal element such as the element X, the element Y, or Cu by using an atomization method, a metal powder in which a Si phase, and a SiX compound phase and a YCu compound phase depending on the component composition are crystallized can be obtained. When the obtained metal powder is pulverized by using a bead mill pulverization method or the like, the plurality of phases are separated, and the Si particles, the SiX compound particles, and the YCu compound particles become independent particles. Using the obtained particle mixture as the raw material active material, it is sufficient to perform a granulation step to be described later.

A shape of the active material particles is not particularly limited, and may be any shape such as a spherical shape, an elliptical shape, a crushed shape, a facetted shape, a band shape, a fiber shape, a flake shape, a doughnut shape, or an amorphous shape. In addition, each shape may be solid or hollow. However, from the viewpoint of easily increasing the density of the electrode mixture layer by compressing the electrode using a press and from the viewpoint of hardly causing non-uniform charging and discharging in the electrode, the shape is preferably spherical and solid.

The active material is preferably composed of single particles having a median diameter (D₅₀) of 10 nm or more and 1 µm or less from the viewpoint of excellent cycle characteristics and output characteristics of the battery. Note that, the single particles refer to particles in a state of primary particles dispersed as one particle, unlike a granulated body formed of secondary particles in which a plurality of particles are aggregated or linked. In the present description, the median diameter (D₅₀) means a volume-based particle diameter in a laser diffraction/scattering particle diameter distribution measurement method. The laser diffraction/scattering particle diameter distribution measurement method is a method of measuring a particle size using a phenomenon that a light intensity distribution of diffracted and scattered light varies depending on the particle size when laser light is applied to the particles. In the case where the active material contains the Si particles and the SiX compound particles, and if necessary, the YCu compound particles, each of the particles may be composed of single particles having the above median diameter.

In addition to the above active material, the suspension liquid may further contain ceramics such as alumina, silica, or zirconia, alkali metal-containing transition metal oxides such as lithium niobate, sodium niobate, or lithium silicate, or the like as a filler for alleviating the volume change associated with the charging and discharging.

The organic solvent used as the dispersion medium is not particularly limited, and examples thereof include: hydrocarbon-based organic solvents such as toluene, xylene, dipentene, cyclohexane, methylcyclohexane, ethylcyclohexane, n-hexane, isohexane, n-pentane, and a styrene monomer; alcohol-based organic solvents such as methanol, ethanol, n-propyl alcohol, isopropyl alcohol (IPA), n-butanol, isobutanol, octanol, benzyl alcohol, and diacetone alcohol; ester-based organic solvents such as ethyl acetate, propyl acetate, isopropyl acetate, butyl acetate, isobutyl acetate, ethylene glycol monoethyl ether acetate, diethylene glycol monobutyl ether acetate, propylene glycol monomethyl ether acetate, methoxybutyl acetate, methylmethoxybutyl acetate, ethyl-3-ethoxypropionate, propylene glycol monomethyl ether propionate, a dibasic acid ester, and dimethyl carbonate; ketone-based organic solvents such as acetone, methyl ethyl ketone, methyl isobutyl ketone, methyl hexyl ketone, diisobutyl ketone, cyclohexanone, and isophorone; glycol ether-based organic solvents such as butyl glycol, methyl diglycol, ethyl diglycol, butyl diglycol, 1-methoxy 2-propanol, methyl dipropylene glycol, 3-methoxybutanol, 3-methyl 3-methoxybutanol, and tetrahydrofuran; nitrogen-based organic solvents such as N,N-dimethylformamide, N,N-dimethylacetamide, and N-methylpyrrolidone (NMP); and halogen-based organic solvents such as an alkyl halide, trichloroethylene, chloroform, a hydrofluorocarbon, and a hydrochlorofluorocarbon.

The organic solvent may be either soluble in water or insoluble in water, and is preferably a water-soluble organic solvent, and more preferably a water-miscible organic solvent, since it does not separate from a phosphate-based inorganic binder aqueous solution used in the granulation step. The water-miscible organic solvent is a water-soluble organic solvent that can be mixed with water at any ratio. The solvent is particularly preferably an alcohol-based organic solvent such as ethanol, 1-propanol, and IPA or a nitrogen-based organic solvent such as NMP from the viewpoint that the volatility of the solvent is not too high or not too low, and that the influence on the environment and the human body is small.

The suspension liquid preferably further contains water from the viewpoint of facilitating mixing with the phosphate-based inorganic binder aqueous solution. In the case where the suspension liquid contains water as described above, when the organic solvent used in the suspension liquid is a non-polar solvent, the suspension liquid is likely to separate, making it difficult to mix with the phosphate-based inorganic binder. Therefore, it is preferable to select a water-soluble organic solvent such as an alcohol-based or nitrogen-based organic solvent as the organic solvent constituting the suspension liquid. Among them, as described above, an alcohol-based organic solvent such as ethanol, 1-propanol, and IPA, or a nitrogen-based organic solvent such as NMP is more preferred. In addition, in the case where the suspension liquid contains water, a concentration of water with respect to the organic solvent in the suspension liquid is preferably 10 mass% or more since the inorganic binder is less likely to aggregate or precipitate when the suspension liquid and the phosphate-based inorganic binder aqueous solution are mixed. Specifically, a mass proportion of the organic solvent to water is preferably 1:9 to 9:1, and more preferably 2:8 to 7:3. The suspension liquid preferably has a solid content concentration of 1 mass% or more and 30 mass% or less from the viewpoint of ensuring a sufficient amount of the active material and improving dispersibility of the active material. Note that, the solid content concentration in the suspension liquid refers to a proportion of the solid active material in the entire suspension liquid.

### [3] Inorganic Binder Aqueous Solution

In the production method according to the present embodiment, as described above, the inorganic binder aqueous solution containing the inorganic binder that contains a phosphate as a component (phosphate-based inorganic binder aqueous solution) is used as a raw material for producing the electrode material together with the suspension liquid described above. By using the phosphate-based inorganic binder as a granulation binder, an electrode material having high flame resistance can be produced, and the generation of hydrogen and the oxidation of the active material can be prevented in the step of producing the electrode material.

In general, a granulated body produced using an active Si-based material as an active material and a resin-based binder as a granulation binder may not have sufficient flame resistance. Even a polyimide (PI) used as a resin-based binder having excellent flame resistance has a certain degree of flammability.

In contrast, it is known that an inorganic binder containing a phosphate as a main component (phosphate-based inorganic binder) is more excellent in flame resistance than the resin-based binder such as a PI. In addition, a representative feature of the phosphate-based inorganic binder is that it has a high melting point, is less likely to be thermally decomposed, and has chemically stable properties. For example, the inorganic binder containing a phosphate as a main component is a material having a melting point higher than that of the resin-based binder, and thus has been used for a long time in applications requiring fire resistance. In addition, since an aggregation force during drying is strong, a dense granulated body is likely to be obtained. Furthermore, in the case where a Si-based material is used as the active material, since a specific gravity of the phosphate-based inorganic binder is close to that of Si, if the suspension liquid and the inorganic binder aqueous solution can be sufficiently uniformly mixed, it is expected that a homogeneous mixture is likely to be maintained. Moreover, the phosphate-based inorganic binder is less likely to lose fluidity and a binder function even when coming into contact with the organic solvent contained in the suspension liquid.

In addition to the phosphate-based inorganic binder, an inorganic binder (silicate-based inorganic binder) containing a silicate as a main component, such as lithium silicate, sodium silicate, potassium silicate, or ammonium silicate, is known as a representative inorganic binder. However, when an aqueous solution of the silicate-based inorganic binder is used, hydrogen is generated when the aqueous solution is brought into contact with an alloy-based material. Therefore, not all inorganic binders including the silicate-based inorganic binder can be applied to the present invention aiming to prevent the generation of hydrogen. As a result of studies on various inorganic binders, the present inventors have found that in the case of the phosphate-based inorganic binder aqueous solution, an effect of preventing the generation of hydrogen when the aqueous solution is brought into contact with an active material can be obtained. For this reason, in the production method according to the present embodiment, the phosphate-based inorganic binder is used as the inorganic binder for granulation.

The reason why the generation of hydrogen when the inorganic binder aqueous solution and the active material come into contact with each other can be prevented by using the phosphate-based inorganic binder is, for example, that the phosphate such as an aluminum phosphate is an acidic solute and thus has a function of acidifying water in the vicinity of the electrode material when the electrode material comes into contact with water. Since the generation of hydrogen is prevented in acidic water, it is considered that the oxidation of the active material such as a Si alloy due to water is also prevented.

However, the phosphate which is a component of the inorganic binder is hardly dissolved in the organic solvent. For example, even when aluminum phosphate (Al₂O₃·3P₂O₅·5H₂O) is added as a powder to a suspension liquid (solid content concentration: 40 mass%) containing ethanol and a Si-based material, a homogeneous fine particle mixture cannot be obtained. When a homogeneous fine particle mixture cannot be obtained, the granulated body is heterogeneous, and in the electrode prepared from the granulated body, the cycle characteristics and stability in a high-temperature environment tend to deteriorate, and electrode impedance tends to increase. This also causes a large variation in characteristics of respective electrodes.

Therefore, in the production method according to the present embodiment, the phosphate-based inorganic binder is mixed with the suspension liquid as an aqueous solution having a solid content concentration of 30 mass% or less. Accordingly, a homogeneous fine particle mixture can be obtained through mixing with the suspension liquid. Here, the reason why the solid content concentration is set to 30 mass% or less is that when the solid content concentration is more than 30 mass%, water that hydrates phosphate ions are hydrated with an organic solvent, such as an alcohol, constituting the suspension liquid due to a phenomenon called salting-out or alcohol precipitation, and the phosphate ions are released as a phosphate. The released substance takes a state of a non-uniform bulk aggregate, a powdery precipitate, a uniform gel-like substance, or the like depending on various conditions such as the solid content concentration and the solvent kind in the mixture, a liquid temperature, and a dropping rate. For example, even when an attempt is made to prepare a granulated body by adding an aluminum phosphate (Al₂O₃·3P₂O₅) aqueous solution having a solid content concentration increased to 35 mass% to a suspension liquid (solid content concentration: 40 mass%) containing ethanol and a Si-based material, a large bulk aggregate is generated immediately after the aluminum phosphate aqueous solution is added to the suspension liquid containing ethanol. Therefore, it is extremely difficult to control the particle diameter of the granulated body, and it is also difficult to obtain a homogeneous granulated body.

However, when the solid content concentration in the aluminum phosphate aqueous solution is reduced to 30 mass% or less, the aggregation or the precipitation of the phosphate is clearly less likely to occur even though the release of the phosphate due to salting-out is not completely prevented when the aluminum phosphate aqueous solution is mixed with the suspension liquid, and a homogeneous fine particle mixture or gel-like mixture can be obtained. Accordingly, a homogeneous granulated body can be produced, and production efficiency of the electrode material is also improved. The same applies to other phosphates. However, when the solid content concentration in the phosphate-based inorganic binder aqueous solution is less than 1 mass%, the effect of the phosphate-based inorganic binder such as prevention of the generation of hydrogen or generation of a granulated body having high mechanical strength cannot be sufficiently exhibited. For this reason, in the production method according to the present embodiment, the solid content concentration in the phosphate-based inorganic binder aqueous solution is set to 1 mass% or more and 30 mass% or less. The solid content concentration is preferably 3 mass% or more and 20 mass% or less. Note that, the solid content concentration in the phosphate-based inorganic binder aqueous solution refers to a proportion of a solid content of the phosphate-based inorganic binder in the entire aqueous solution.

The solid content concentration in the phosphate-based inorganic binder aqueous solution may be appropriately determined in the range of 1 mass% or more and 30 mass% or less as described above. In the granulated body to be produced, as the proportion of the granulation binder is lower and the proportion of the active material is higher, an electrode material that provides an electrode having excellent output characteristics and a high energy density tends to be obtained. On the other hand, the mechanical strength and the flame resistance of the granulated body tend to decrease. When the granulated body is brittle, there is a possibility that the granulated body collapses without maintaining the shape in a step of mixing a slurry when forming an electrode from the granulated body or in the process of charging and discharging at the produced electrode, which may cause an increase in electrode impedance. In addition, when the content proportion of the nonflammable phosphate-based inorganic binder is small, the granulated body is likely to generate heat or ignite. Therefore, it is sufficient to set mixing proportions of the active material and the phosphate-based inorganic binder according to the solid content concentration in the phosphate-based inorganic binder aqueous solution and a mixing ratio of the phosphate-based inorganic binder aqueous solution and the suspension liquid containing the active material from the viewpoint of ensuring strength capable of maintaining the shape of the granulated body, ensuring sufficient flame resistance, and from the viewpoint of ensuring the output characteristics required in the electrode, and the like. Specifically, in the case where the active material is Si-based single particles having a median diameter (D₅₀) of 10 nm or more and 1 µm or less, a proportion of the granulation binder with respect to the entire granulated body is preferably 1 mass% or more and 30 mass% or less, and more preferably 3 mass% or more and 15 mass% or less, depending on the kind and the particle diameter of the active material.

The phosphate constituting the phosphate-based inorganic binder is not particularly limited, and is preferably an aluminum phosphate. In particular, an aluminum phosphate represented by a condensed formula Al₂O₃·nP₂O₅·mH₂O (0.5 ≤ n ≤ 4 and 0 ≤ m ≤ 8) is preferably contained. In the case where the condition that n is a real number of 0.5 or more and 4 or less is satisfied, even when an amount of the granulation binder used is reduced, a granulated body having high mechanical strength can be obtained, and the flame resistance is improved. In addition, in the above range, as n is smaller, water resistance of the granulated body after a heat treatment is improved. When the water resistance of the granulated body is high, an aqueous binder is likely to be used as an electrode binder (a binder used when the granulated body is formed into an electrode). In addition, in the case where the phosphate is subjected to a heat treatment, aluminum tetrametaphosphate (Al₄(P₄O₁₂)₃) is likely to be generated when the value of n is small, and aluminum orthophosphate (AlPO₄) is likely to be generated when the value of n is large.

The phosphate constituting the phosphate-based inorganic binder may contain B₂O₃, SiO₂, GeO₂, Fe₂O₃, TiO₂, MnO, CaO, MgO, V₂O₅, As₂O₃, TeO₂, ZnO, or PbO, instead of Al₂O₃ or in addition to Al₂O₃. However, in the case where a large amount of such a metal oxide is contained, it may cause a decrease in strength and an increase in irreversible capacity of the battery. Therefore, even when these metal oxides are contained in the phosphate, the amount thereof is preferably smaller than that of Al₂O₃. More preferably, a total amount of the phosphate constituting the phosphate-based inorganic binder is the above aluminum phosphate.

The phosphate constituting the phosphate-based inorganic binder may be an anhydride (m = 0) or a hydrate (m > 0). However, in the case of a hydrate, as described above, the hydration number m in the aluminum phosphate is a real number of 10 or less. Further, in the case where the hydration number m is a real number of more than 8, the mechanical strength of the granulated body decreases, and thus the structure of the granulated body may be likely to collapse in the step of producing the slurry, the flame resistance may not be sufficiently improved, and the irreversible capacity may increase. Therefore, the hydration number m in the aluminum phosphate is preferably 8 or less, and more preferably 6 or less.

The phosphate such as the above aluminum phosphate has a property of being cured by drying, and further being dehydrated by a heat treatment at a high temperature to form a metallophosphate bond such as an aluminophosphate bond, and changing to a strong substance. Specifically, the hydration number m is 6 or more and 8 or less at a heating temperature of 100°C to 150°C, 5 or more and 6 or less at 150°C to 200°C, 2 or more and 5 or less at 200°C to 300°C, and substantially 0 at 450°C to 500°C. In this manner, although hydration water contained in the phosphate completely disappears through heating and drying at 450°C or higher, dephosphorization occurs at 1000°C or higher, and the value of n decreases. From such a viewpoint, in the heat treatment performed after mixing the phosphate-based inorganic binder aqueous solution with the suspension liquid containing the active material, the heating temperature is preferably 100°C or higher and 500°C or lower.

When preparing the phosphate-based inorganic binder aqueous solution, the phosphate may be prepared by dissolving a phosphate prepared in advance in water, or may be prepared by reacting orthophosphoric acid (H₃PO₄) with a metal source such as an aluminum source. For example, an aluminum phosphate can be generated by mixing and reacting 1 mol of orthophosphoric acid and 3 mol of aluminum hydroxide. In the case where reactivity is poor, the reactivity tends to be improved by heating. Since orthophosphoric acid is soluble in water, alcohol, or ether, orthophosphoric acid may be added to a suspension liquid containing an organic solvent and an active material.

The inorganic binder aqueous solution may further contain an alkali metal oxide (A₂O, A is an alkali metal element) or an alkali metal salt, in addition to the phosphate. When the inorganic binder aqueous solution contains an alkali metal oxide or an alkali metal salt, an effect of reducing the resistance of the battery produced using the electrode material can be expected. However, when the alkali metal oxide or the alkali metal salt is excessively contained, the strength of the granulated body decreases, and therefore, it is preferably contained in an amount of 20 mass% or less with respect to the phosphate. When the addition amount thereof is about 0.1 mass% or more, the effect of addition can be sufficiently obtained.

The inorganic binder aqueous solution may further contain a boron compound such as boric acid (B(OH)₃), metaboric acid (HBO₂), or boron oxide (B₂O₃), in addition to the phosphate. When the boron compound is contained, there is an effect that the electrode material is less likely to absorb moisture, and thus it is expected that moisture deterioration of an electrolytic solution or an electrolyte can be prevented in the battery. In this case, the boron compound is preferably contained in an amount of 20 mass% or less with respect to the phosphate. When the addition amount thereof is about 0.1 mass% or more, the effect of addition can be sufficiently obtained.

The inorganic binder aqueous solution may contain an organic nitrogen compound such as an ammonium salt, urea, or urea phosphate, in addition to the phosphate. When the organic nitrogen compound is contained, there is an effect that the electrode material is less likely to absorb moisture, and thus it is expected that moisture deterioration of an electrolytic solution or an electrolyte can be prevented in the battery. In this case, the organic nitrogen compound is preferably contained in an amount of 20 mass% or less with respect to the phosphate. When the addition amount thereof is about 0.1 mass% or more, the effect of addition can be sufficiently obtained.

The inorganic binder aqueous solution may further contain a resin-based binder as the granulation binder, in addition to the phosphate-based inorganic binder. As the resin-based binder, a known resin-based binder can be used. For example, a resin-based binder generally used for a positive electrode or a negative electrode can be used. From the viewpoint of chemical stability, heat resistance, reduction resistance, and the like of the granulated body, polybenzimidazole, a styrene-butadiene rubber, polyvinylidene fluoride, a carboxymethyl cellulose salt, polyvinyl alcohol, a polyacrylic acid, a polyacrylic acid salt, a cellulose nanofiber, a polyimide, a polyamic acid, a polyamide, and a polyamideimide are preferred. However, from the viewpoint of maintaining high flame resistance of the granulated body, a content of the resin-based binder may be reduced to 100% or less with respect to the phosphate-based inorganic binder. In the case where it is necessary to maintain particularly high heat resistance of the granulated body, it is preferable not to add the resin-based binder.

In addition, the inorganic binder aqueous solution may further contain ceramic particles as the granulation binder, in addition to the phosphate-based inorganic binder. As the ceramic particles, known ceramic particles can be used. Examples thereof include silica, alumina, zirconia, titania, and yttria. In the case of adding the ceramic particles, an addition amount thereof is preferably 0.1% or more and 20% or less with respect to the phosphate. Note that, in the case where the inorganic binder aqueous solution contains solid components other than the phosphate-based inorganic binder, such as the alkali metal compound, the boron compound, the organic nitrogen compound, the resin-based binder, and the ceramic particles listed herein, the solid content concentration in the phosphate-based inorganic binder of 1 mass% or more and 30 mass% or more described above is defined as the solid content concentration in only the phosphate-based inorganic binder without including the solid components other than the phosphate-based inorganic binder.

### [4] Granulation Step

As described above, the production method according to the present embodiment includes, as the granulation step, obtaining the mixed liquid by mixing the inorganic binder aqueous solution containing a phosphate as a component and the suspension liquid in which an active material is dispersed in an organic solvent, subjecting the mixed liquid to a heat treatment to vaporize water, and then obtaining a granulated body. A method of mixing the inorganic binder aqueous solution and the suspension liquid is not particularly limited as long as a homogeneous mixed liquid composed of respective materials can be obtained, and for example, a known stirring method or mixing method such as a multi-axis planetary mixer, a tumbling mill, a vibration mill, a planetary mill, a swing mill, a horizontal mill, an attritor mill, a jet mill, a grinder, an ultrasonic homogenizer, a stirring homogenizer, a fluidizer, a paint shaker, a mixer, and a magnetic stirrer can be used.

In addition, the mixed liquid may contain only the inorganic binder aqueous solution containing a phosphate as a component and the suspension liquid in which an active material is dispersed in an organic solvent as components, and it is preferable to further add carbon as a conductive additive. By adding carbon, the cycle characteristics and input/output characteristics of the electrode to be produced can be improved. The addition of carbon may be performed in any one of a mode in which carbon is dispersed in the inorganic binder aqueous solution containing a phosphate as a component, a mode in which carbon is dispersed in accordance with the suspension liquid in which an active material is dispersed in an organic solvent, and a mode in which carbon is dispersed in the mixed liquid containing the inorganic binder aqueous solution and the suspension liquid.

The carbon is not particularly limited as long as it improves conductivity of the granulated body, and carbon known as a conductive additive of the electrode can be used. Examples thereof include graphite, furnace black, channel black, acetylene black, thermal black, lamp black, disk black, roller black, carbon black, soft carbon, hard carbon, glassy carbon, carbon nanotubes, carbon nanofibers (for example, vapor-grown carbon fibers such as "VGCF" (registered trademark), graphene, and carbon nanohorns, and one or two or more kines of these may be used.

When a total of the active material, the inorganic binder, and the carbon contained in the granulated body is 100 mass%, the carbon is preferably contained in an amount of 1 mass% to 40 mass%. There are also carbon materials (graphite, soft carbon, hard carbon, and the like) having both functions as a conductive additive and an active material. In the case where a material other than these carbon materials, such as a material capable of forming an alloy phase with an alkali metal, is used as the active material, when the content of carbon is more than 40 mass%, a proportion of the active material as a battery decreases by the amount, and thus the electrode capacity density is likely to decrease.

A heat treatment method for obtaining the granulated body containing the inorganic binder and the active material after preparing the mixed liquid by mixing the inorganic binder aqueous solution and the suspension liquid containing an active material is not particularly limited, and for example, known heat treatments such as a heat drying method, a hot air drying method, a vacuum heat drying method, a far-infrared drying method, a spray drying method, and fluidized bed drying can be used. Among them, from the viewpoint that the obtained granulated body is likely to be spherical and the particle diameter is also likely to be controlled, it is preferable to perform the heat treatment including the spray drying method. As described above in the section of the inorganic binder aqueous solution, the heating temperature during the heat treatment is preferably 100°C or higher and 500°C or lower.

In the spray drying method, the mixed liquid is formed into fine droplets, and the droplets are instantaneously dried to remove the liquid component, thereby forming a granulated body in which active materials are bonded by the inorganic binder. For example, a mixed liquid in which an active material is dispersed in an inorganic binder aqueous solution is sprayed from above in a greenhouse heated to 50°C to 300°C at 1 mL/min to 30 mL/min and an air pressure of 0.01 MPa to 5 MPa to form aggregated particles, and the aggregated particles are dried to obtain a granulated body. The granulated body obtained by the spray drying method may be further subjected to vacuum drying.

The granulated body produced by the production method according to the present embodiment preferably has a median diameter (D₅₀) of 0.5 µm or more and 50 µm or less. When the median diameter of the granulated body is set to 0.5 µm or more, deterioration of powder handleability due to scattering, aggregation, or the like of the granulated body powder can be prevented. On the other hand, when the median diameter of the granulated body is 50 µm or less, unevenness of the electrode surface is prevented in the preparation of the electrode, and a uniform electrode is likely to be prepared. In order to adjust the particle size of the granulated body, sieving classification, cyclone classification, weight classification, inertial classification, centrifugal classification, precipitation classification, or the like is preferably performed.

The obtained granulated body may be further coated with carbon, a metal oxide, a solid electrolyte, or the like. In this case, an amount of the coating material is preferably 0.1 mass% or more and 20 mass% or less with respect to the granulated body. For example, when a carbon film is formed on the surface of the granulated body by CVD, decomposition of the electrolytic solution is prevented in a battery to be produced using the electrode material, and very good cycle characteristics can be obtained.

Through the granulation step, a granulated body as the electrode material according to the present embodiment can be obtained. The granulated body contains an active material and an inorganic binder containing phosphate as a component. Further, the granulated body may contain an additive such as carbon as a conductive additive as necessary. In the electrode material, a content of the phosphate-based inorganic binder is preferably 1 mass% or more and 30 mass% or less. When the content of the phosphate-based inorganic binder is within this range, high effects of using the phosphate-based inorganic binder, such as improvement of the mechanical strength and the flame resistance of the granulated body, can be obtained, and the precipitation or the aggregation of the phosphate-based inorganic binder in the production steps are avoided, so that a homogeneous granulated body is likely to be obtained. More preferably, the content of the phosphate-based inorganic binder is 3 mass% or more, and still more preferably 10 mass% or more. In addition, the content is preferably 20 mass% or less, and more preferably 15 mass% or less. Note that, the content of the phosphate-based inorganic binder in the electrode material refers to a proportion of the phosphate-based inorganic binder in the entire solid content of the electrode material.

In the production method according to the present embodiment, the granulated body containing the active material and the binder can be produced efficiently while preventing the generation of hydrogen and the surface oxidation of the active material. The electrode material according to the present embodiment thus obtained has high flame resistance and thermal stability, and also has high cycle characteristics. In addition, when a slurry is prepared, the slurry has high coatability. In general, in the granulated body as the electrode material, as the particle diameter increases, a granulated body having excellent flame resistance can be obtained and a scattering property of the electrode material also decreases, and thus, although the handling property is excellent, the input/output characteristics are likely to decrease. In addition, in the case where the active material contains a material (for example, an alloy-based material capable of forming an alloy phase with an alkali metal) in which a large volume change occurs with the charging and discharging, the cycle characteristics of the battery to be produced deteriorate. However, the granulated body produced by the production method of the present embodiment provides an electrode having high flame resistance, high thermal stability, which can produce an electrode having high input/output characteristics, and high cycle characteristics, as to be described later in Examples.

### [5] Use of Electrode Material

The electrode material according to the present embodiment obtained as described above can be used as a material for a positive electrode or a negative electrode (electrode) of a non-aqueous electrolyte secondary battery. Specifically, the electrode can be produced by molding the electrode material on a current collector together with an electrode binder.

The electrode binder can be used as long as it can be dispersed or dissolved in water or an organic solvent and has a function of bonding the current collector and the granulated body containing the active material. The electrode material according to the present embodiment is characterized by being less likely to generate hydrogen even when in contact with water. Therefore, the electrode binder may be an aqueous binder. As the electrode binder, for example, resin-based binders such as polyvinylidene fluoride (PVdF), a polytetrafluoroethylene (PTFE), a polyimide (PI), a polyamide, a polyamideimide, a polyacrylic, a styrene-butadiene rubber (SBR), an ethylene-vinyl acetate copolymer (EVA), a styrene-ethylene-butylene-styrene copolymer (SEBS), carboxymethyl cellulose (CMC), xanthan gum, a polyvinyl alcohol (PVA), a polyvinyl butyral (PVB), ethylene vinyl alcohol, a polyethylene (PE), a polypropylene (PP), a polyacrylic acid, lithium polyacrylate, sodium polyacrylate, potassium polyacrylate, ammonium polyacrylate, methyl polyacrylate, ethyl polyacrylate, amine polyacrylate, a polyacrylic acid ester, an epoxy resin, a polyethylene terephthalate (PET), a polybutylene terephthalate (PBT), nylon, vinyl chloride, a silicone rubber, a nitrile rubber, a cyanoacrylate, a urea resin, a melamine resin, a phenol resin, latex, a polyurethane, silylated urethane, nitrocellulose, dextrin, polyvinylpyrrolidone, vinyl acetate, a polystyrene, chloropropylene, a resorcinol resin, a polyaromatic, modified silicone, a methacrylic resin, a polybutene, a butyl rubber, 2-propenoic acid, cyanoacrylic acid, methyl methacrylate, glycidyl methacrylate, an acrylic oligomer, 2-hydroxyethyl acrylate, a polyacetal, alginic acid, starch, sucrose, lacquer, glue, casein, and a cellulose nanofiber, or inorganic binders such as a lithium silicate (Li₂O·nSiO₂, n = 0.5 to 6), a sodium silicate (Na₂O·nSiO₂, n = 0.5 to 6), a potassium silicate (K₂O·nSiO₂, n = 0.5 to 6), colloidal silica, cement, or an aluminum phosphate (Al₂O₃·nP₂O₅, n = 0.5 to 6) can be used. These electrode binders may be used alone or in combination of two or more kinds thereof.

When an electrode is to be formed, the electrode material is mixed with the electrode binder to prepare an electrode slurry. In the electrode slurry, when a total amount of a solid content in the electrode slurry takes as 100 mass%, the electrode binder is preferably contained in an amount of 0.1 mass% to 30 mass%. When the electrode binder is contained in an amount of 0.1 mass% or more, flexibility of the electrode is improved, and peeling off or dropping is less likely to occur in a press pressure adjustment step or a winding step for the electrode. On the other hand, when the content of the binder is reduced to 30 mass% or less, in the electrode, ion conductivity is high, electric resistance is low, the proportion of the active material as a battery is sufficiently ensured, and the electrode capacity density is increased.

The electrode slurry preferably further contains a conductive additive. When the total amount of the solid content contained in the electrode slurry takes as 100 mass%, the conductive additive is preferably contained in an amount of 0.5 mass% or more and 20 mass% or less. The conductive additive for the electrode is not particularly limited as long as it has electron conductivity, and for example, carbon same as the above granulation conductive additive can be used.

The current collector used for the electrode may be a material having electron conductivity and capable of energizing the held active material. For example, it is desirable to use a current collector made of Cu, Ni, Ti, Al, stainless steel (SUS), carbon, or an alloy or coating material containing these elements. Examples of a shape of the current collector include a linear shape, a bar shape, a plate shape, a foil shape, and a porous shape, and any of them can be used. The electrode slurry is formed into a desired shape on the surface of the current collector by coating or the like, and is appropriately dried, and thus the electrode can be prepared.

The electrode thus obtained can be used as a positive electrode or a negative electrode of a non-aqueous electrolyte secondary battery. The non-aqueous electrolyte secondary battery is a battery including a positive electrode, a negative electrode, and a non-aqueous electrolyte interposed between the positive electrode and the negative electrode, and examples thereof include a lithium-ion battery, a sodium ion battery, a potassium ion battery, a lithium ion capacitor, a sodium ion capacitor, and a potassium ion capacitor.

In the case of using the prepared electrode as a positive electrode of a secondary battery, the secondary battery can be prepared by combining the prepared electrode with an electrode having a charging/discharging potential lower than that of the prepared electrode. On the other hand, in the case of using the prepared electrode as a negative electrode of a secondary battery, the secondary battery can be prepared by combining the prepared electrode with an electrode having a charging/discharging potential higher than that of the prepared electrode. For example, in the case of using the prepared electrode as a positive electrode, a counter electrode (negative electrode) is not particularly limited as long as it can be an electrode used as a negative electrode of a secondary battery.

The electrolyte used in the secondary battery may be a liquid or a solid (lithium supporting salt or the like) capable of moving alkali metal ions or fluorine compound anions from the positive electrode to the negative electrode or from the negative electrode to the positive electrode. That is, an electrolyte same as that used in a secondary battery using a known non-aqueous electrolyte can be used. Examples thereof include an electrolytic solution, a gel electrolyte, a solid electrolyte, an ionic liquid, and a molten salt. Here, the electrolytic solution refers to a state where an electrolyte is dissolved in a solvent.

The structure of the secondary battery is not particularly limited, and existing forms and structures such as a lamination type and a winding type can be adopted. In these forms, an electrode group in which a positive electrode and a negative electrode are laminated or wound so as to face each other with a separator interposed therebetween is sealed in a state of being immersed in an electrolytic solution to form a secondary battery. Alternatively, an electrode group in which a positive electrode and a negative electrode are laminated or wound so as to face each other via a solid electrolyte is sealed to form a secondary battery.

The lithium ion capacitor can be produced in the same manner as the lithium ion battery except that an operation of the counter electrode is mainly different. Specifically, for example, the battery can be prepared in the same manner as the battery except that the electrode according to the present embodiment is used as the positive electrode and a negative electrode for a lithium ion capacitor in the related art is used as the negative electrode. An alkali metal ion battery other than the lithium-ion battery can be prepared in the same manner as the lithium ion battery except that lithium as a charge carrier of the lithium ion battery is replaced with sodium or potassium. Specifically, the sodium ion battery can be prepared in the same manner as the battery except that the electrode prepared as described above is used as the positive electrode, a negative electrode for a sodium ion battery in the related art is used as the negative electrode, and a sodium supporting salt is used as the electrolytic solution. The potassium ion battery can be prepared in the same manner as the lithium-ion battery except that the electrode prepared as described above is used as the positive electrode, a negative electrode for a potassium ion battery in the related art is used as the negative electrode, and a potassium supporting salt is used as the electrolytic solution.

As described above, the electrode material according to the present embodiment has high flame resistance and high thermal stability, and an electrode prepared using the electrode material has high input/output characteristics and high cycle characteristics. As to be described in Examples to be described later, the flame resistance and the thermal stability of the electrode material each can be evaluated by a Class 2 hazardous material test and performing differential scanning calorimetry (DSC). In addition, the input/output characteristics and the cycle characteristics of the electrode can be evaluated by preparing a lithium-ion battery using the electrode material and performing a charging and discharging test.

### EXAMPLES

Hereinafter, Examples of the present invention are described. Note that, the present invention is not limited by these Examples.

### [1]. Sample Preparation 1

### [Preparation of Si Alloy]

A molten alloy composed of Si (70 mass%) and Fe (30 mass%) was made into a powder by using a gas atomization method, the powder was pulverized using a bead mill, and further classified to 150 µm or less using a sieve, thereby preparing a finely powdered Si alloy. Note that, an argon atmosphere was used as an atmosphere during the preparation of the molten alloy and the gas atomization. In addition, during the gas atomization, a high-pressure (4 MPa) argon gas was sprayed onto the molten alloy falling like a rod in the atomization chamber.

### [Preparation of Si Alloy Suspension Liquid]

Using a wet bead mill, the finely powdered Si alloy obtained above and ethanol were stirred together with zirconia beads (0.3 mm in diameter) until the median diameter (D₅₀) of the Si alloy reached 700 nm (peripheral speed: 10 m/sec) to prepare a Si alloy suspension liquid having a solid content concentration of 40 mass%. Here, the median diameter (D₅₀) of the Si alloy is a volume-based particle diameter measured using a laser diffraction/scattering particle diameter distribution measurement device (Partica LA-960V2 manufactured by HORIBA, Ltd.).

### [Preparation of Electrode Material]

### (Example 1)

As an electrode material in Example 1, a granulated body containing an active material and an inorganic binder that contains a phosphate as a component was prepared by the following method.

Water was added to the Si alloy suspension liquid prepared above such that the solid content concentration was 10 mass%, followed by mixing to prepare a suspension liquid A. On the other hand, an aluminum phosphate (Al₂O₃·3P₂O₅) aqueous solution and carbon black (CB, average primary particle diameter: 35 nm, specific surface area: 70 m²/g) were added together with water such that the solid content concentration of aluminum phosphate was 10 mass%, followed by mixing to prepare a suspension liquid B. Further, the suspension liquid A and the suspension liquid B were mixed such that the solid content composition was Si alloy:Al₂O₃·3P₂O₅:CB = 93:5:2 mass% to prepare a mixed liquid for spray drying. At this time, when the presence or absence of generation of hydrogen was checked by visual observation, no generation of bubbles was observed, and thus no generation of hydrogen from the mixed liquid was observed. Note that, the suspension liquid A, the suspension liquid B, and the mixed liquid for spray drying were all obtained by mixing using a planetary centrifugal mixer (Awatori Rentaro ARE-310, manufactured by THINKY Corporation) under conditions of atmosphere, and 2000 rpm for 10 minutes.

Further, the mixed liquid for spray drying obtained above was subjected to spray dry using a spray dryer (ADL311S-A, manufactured by Yamato Scientific Co., ltd.), and then subjected to vacuum drying (300°C, 12 hours) to obtain a granulated body as an electrode material. The spray drying conditions were an inlet drying temperature of 170°C, an outlet drying temperature of 70°C to 90°C, a pressure of 0.04 MPa to 0.05 MPa, and an average dry air flow rate of 0.1 m³/min to 0.2 m³/min.

### (Examples 2 to 6)

Electrode materials in Examples 2 to 6 were prepared in the same manner as in Example 1 except that the solid content composition in the mixed liquid for spray drying obtained by mixing the suspension liquid A and the suspension liquid B was as follows. In any of Examples 2 to 6, no generation of hydrogen from the mixed liquid was observed as in Example 1. · Example 2: Si alloy:Al₂O₃·3P₂O₅:CB = 88:10:2 mass%
· Example 3: Si alloy:Al₂O₃·3P₂O₅:CB = 91:7:2 mass%
· Example 4: Si alloy:Al₂O₃·3P₂O₅:CB = 88:7:5 mass%
· Example 5: Si alloy:Al₂O₃·3P₂O₅:CB = 85:5:10 mass%
· Example 6: Si alloy:Al₂O₃·3P₂O₅:CB = 90:5:5 mass%

### (Comparative Example 1)

An electrode material in Comparative Example 1 was prepared using a resin-based binder as a binder instead of the phosphate-based inorganic binder. Specifically, water was added to a Si alloy suspension liquid such that the solid content concentration was 5 mass%, followed by mixing to prepare a suspension liquid A. On the other hand, a polyimide aqueous solution (UPIA-LB2001 manufactured by UBE Corporation) and CB were mixed together with water such that the solid content concentration of the polyimide was 5 mass% to prepare a suspension liquid B. Further, the suspension liquid A and the suspension liquid B were mixed such that the solid content composition was Si alloy:polyimide:CB = 93:5:2 mass% to prepare a mixed liquid for spray drying. The electrode material in Comparative Example 1 was prepared under the same conditions as in Example 1 except for the above.

### (Comparative Example 2)

As an electrode material in Comparative Example 2, the Si alloy suspension liquid was simply dried under a reduced pressure to obtain a Si alloy fine powder.

### (Comparative Example 3)

Water was added to a Si alloy suspension liquid such that the solid content concentration was 35 mass%, followed by mixing to prepare a suspension liquid A. On the other hand, an aluminum phosphate (Al₂O₃·3P₂O₅) aqueous solution and CB were added together with water such that the solid content concentration of aluminum phosphate was 35 mass%, followed by mixing to prepare a suspension liquid B. Further, when the suspension liquid A and the suspension liquid B were mixed such that the solid content composition was Si alloy:Al₂O₃·3P₂O₅:CB = 93:5:2 mass%, an aggregate of about several mm was generated as a precipitate. This aggregate did not disappear even when the mixed liquid was subsequently diluted with water and mixed, and did not appear to disappear or decrease. When the mixed liquid for spray drying contains an aggregate on the order of mm, spray nozzles for spray drying are clogged. Therefore, in the production method in Comparative Example 3, a mixed liquid for spray drying could not be prepared. Note that, the conditions not described were the same as those in Example 1.

### [2] Evaluation Method and Evaluation Result 1

### [Evaluation of Step of Producing Electrode Material]

As described above, in Examples 1 to 6, the suspension liquid A in which the Si alloy as an active material was suspended in the organic solvent and the suspension liquid B containing the inorganic binder aqueous solution containing a phosphate as a component were mixed to prepare the mixed liquid for spray drying. In these Examples 1 to 6, no generation of hydrogen from the mixed liquid was observed, and the generation of the electrode material can be safely advanced. Further, in Comparative Example 3 in which the solid content concentration of the phosphate in the suspension liquid B was more than 30 mass%, the aggregate is generated due to precipitation, and the spray drying cannot be performed, whereas in Examples 1 to 6 in which the solid content concentration of the phosphate in the suspension liquid B was reduced to 30 mass% or less, no precipitation occurred, and the spray drying can be normally performed. From this, it is found that by reducing the solid content concentration in the inorganic binder aqueous solution to 30 mass% or less, the precipitation of the phosphate is prevented, and the production of the granulated body as the electrode material can be efficiently advanced. Note that, the electrode material in Comparative Example 3 from which a mixed liquid usable for spray drying was not obtained was not used in each of the following evaluations.

### [Observation of Electrode Material]

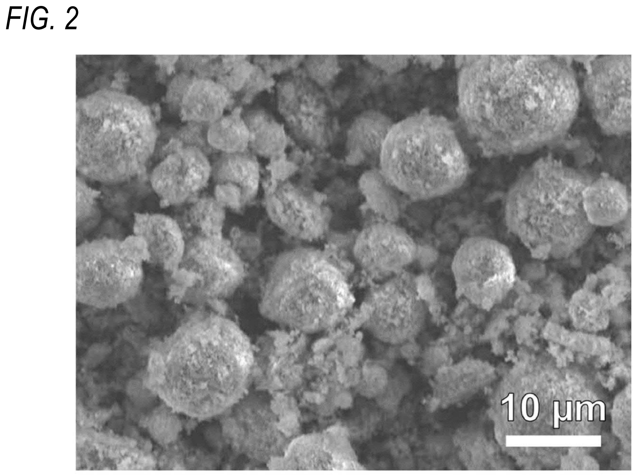

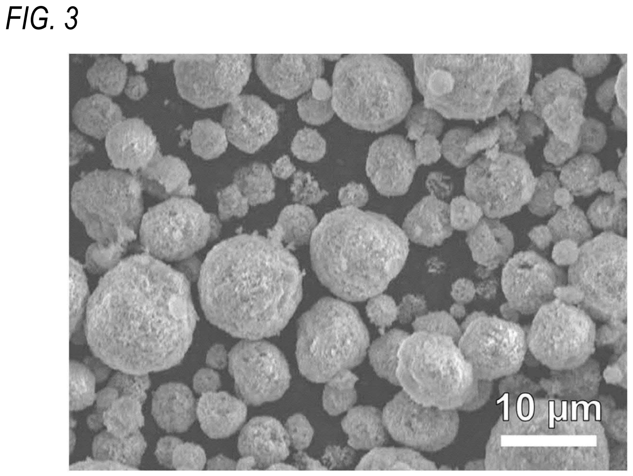

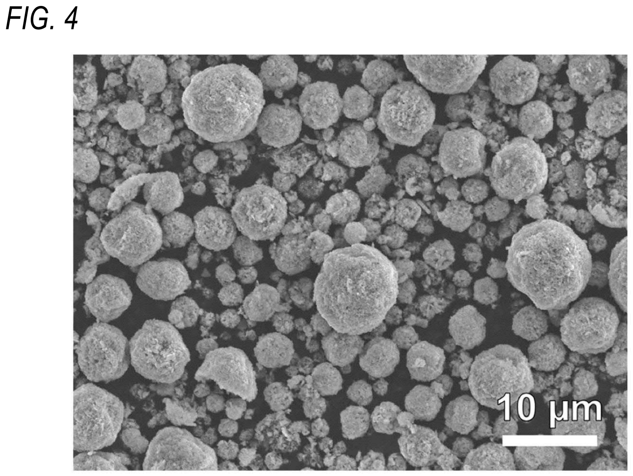

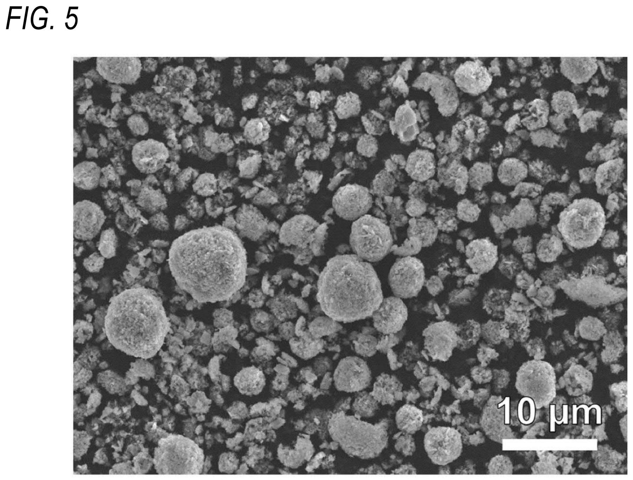

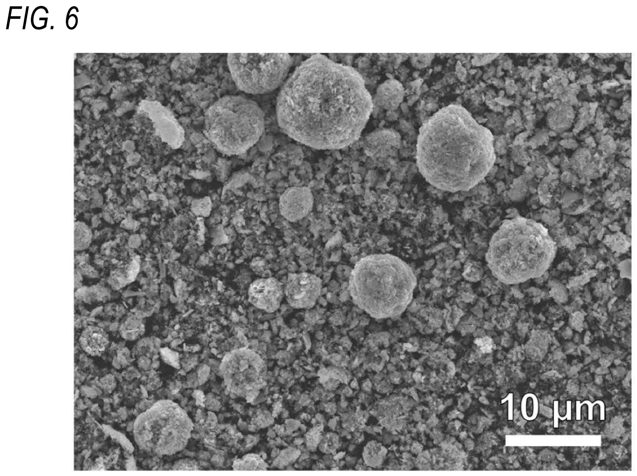

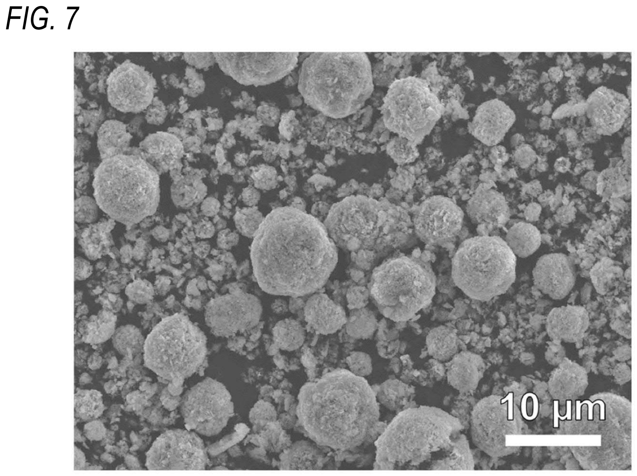

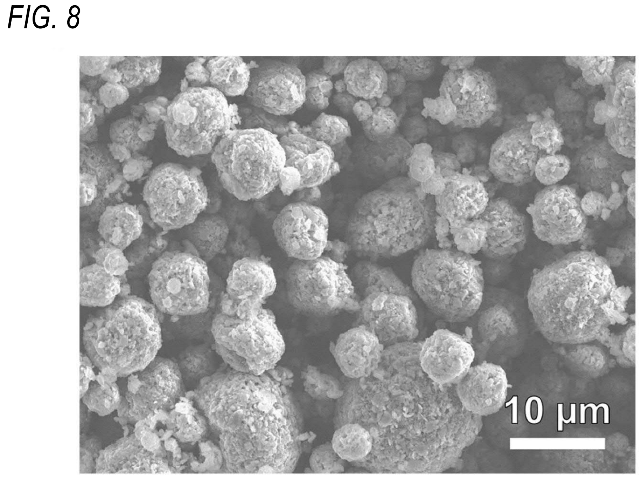

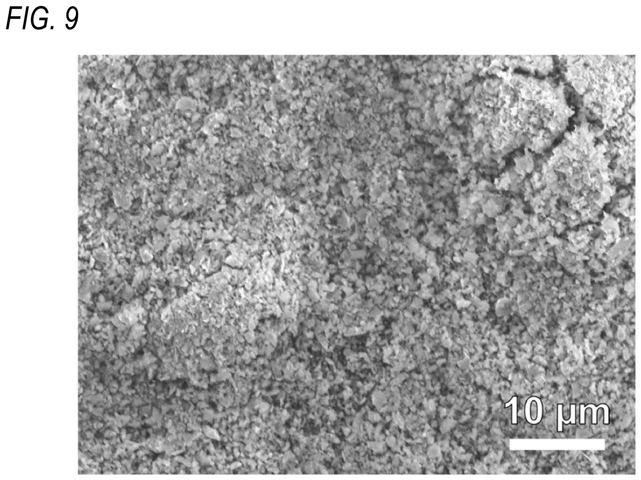

In order to check the particle structure of the electrode material, the samples in Examples 1 to 6 and Comparative Examples 1 and 2 were observed using a scanning electron microscope (SEM). An electrode mixture layer for SEM observation was prepared by embedding, in a resin, the granulated body obtained as the electrode material in each of Examples and Comparative Examples above, followed by mechanical polishing. FIGS. 2 to 7 each show a surface SEM image of the electrode mixture layer in Examples 1 to 6, and FIGS. 8 and 9 each show a surface SEM image of the electrode mixture layer in Comparative Examples 1 and 2.

As is clear from FIGS. 2 to 9, spherical granulated bodies are observed in Examples 1 to 6 and Comparative Example 1, but no spherical granulated bodies are observed and only fine particles are observed in Comparative Example 2 in which no binder is used. From this, it is found that a granulated body is formed by binding the active material using the binder.

### [Evaluation of Flame Resistance]

In order to evaluate the flame resistance of each electrode material, a small gas flame ignition test was performed for each electrode material in Examples 1 to 6 and Comparative Examples 1 and 2 in accordance with the Class 2 hazardous material test. In the small gas flame ignition test, under the conditions of an environmental temperature of 20°C, an environmental humidity of 50%, an atmospheric pressure, no wind, a flame contact area of 2 cm², and a flame contact angle of 30°, a flame was brought into contact with the electrode material (3 mL) provided in a hemispherical shape on a heat insulating plate for 10 seconds to check the ease of ignition of the electrode material.

Table 1 shows the determination results for the flame resistance. A case where the electrode material is ignited within 3 seconds after being brought into contact with the flame is evaluated as "C", a case where the electrode material is ignited within longer than 3 seconds and 10 seconds or shorter after being brought into contact with the flame is evaluated as "B", and a case where the electrode material is not ignited even after being brought into contact with the flame for longer than 10 seconds is evaluated as "A". Even when the electrode material is ignited, if the time until ignition is longer than 3 seconds, the electrode material can be regarded as having sufficiently high flame resistance.

**[Table 1]**

| Electrode material | Composition (mass%) of granulated body | | | | Evaluation result for flame resistance |
|---|---|---|---|---|---|
| | Si alloy | Aluminum phosphate Al₂O₃·3P₂O₅ | Polyimide PI | Carbon black CB | |
| Example 1 | 93 | 5 | - | 2 | B |
| Example 2 | 88 | 10 | - | 2 | A |
| Example 3 | 91 | 7 | - | 2 | B |
| Example 4 | 88 | 7 | - | 5 | B |
| Example 5 | 85 | 5 | - | 10 | B |
| Example 6 | 90 | 5 | - | 5 | B |
| Comparative Example 1 | 93 | - | 5 | 2 | C |
| Comparative Example 2 | 100 | - | - | - | C |

As is clear from Table 1, Examples 1 to 6 are powder electrode materials less likely to ignite than Comparative Examples 1 and 2. In particular, in Example 2 containing 10 mass% of aluminum phosphate, since the electrode material was not ignited even after 10 seconds, it is presumed that the electrode material is less likely to ignite as the content of the aluminum phosphate increases.

### [Evaluation of Thermal Stability]

In order to check the thermal stability of the electrode material, differential scanning calorimetry (DSC) measurement was performed on each of the electrode materials in Examples 1 to 6 and Comparative Examples 1 and 2. The DSC measurement was performed by enclosing each electrode material (6.3 mg to 8.5 mg) in an open aluminum pan. In the DSC measurement, air was flowed at a rate of 5 mL/min, and the temperature was raised at a rate of 10°C/min in a measurement range of 50°C to 450°C.

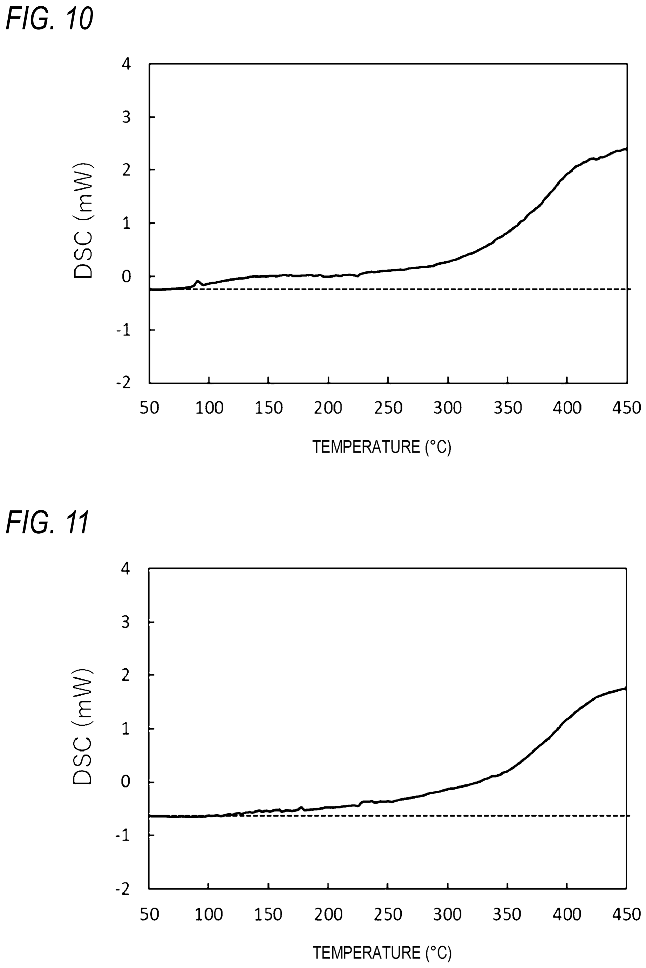

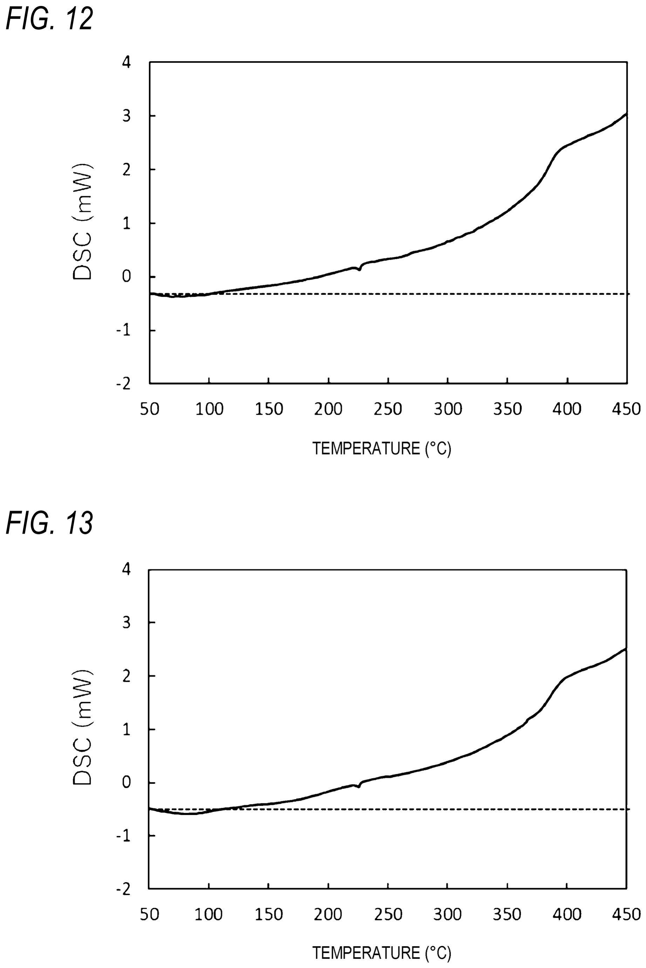

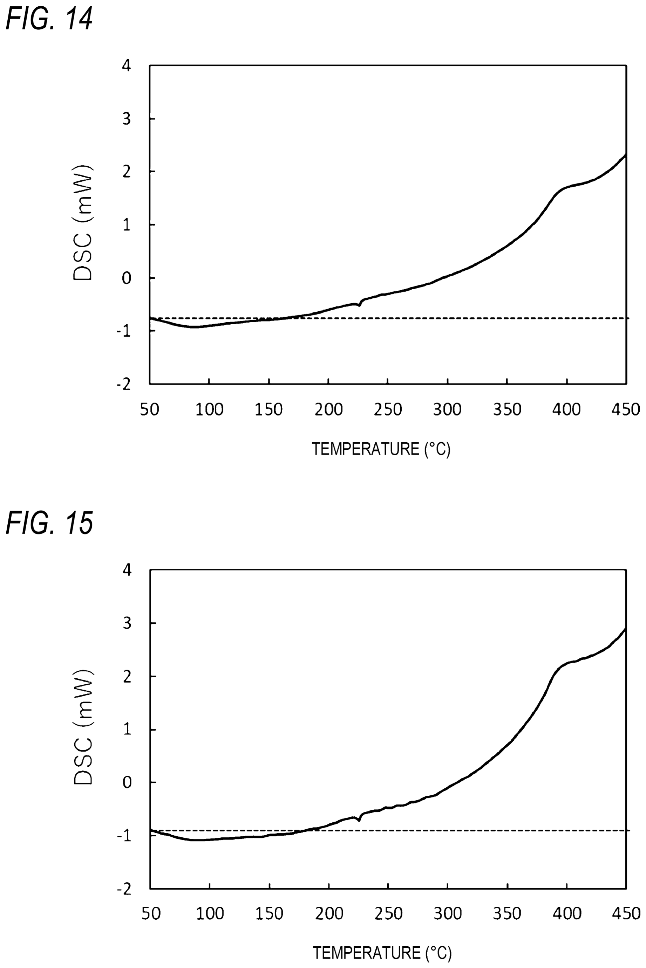

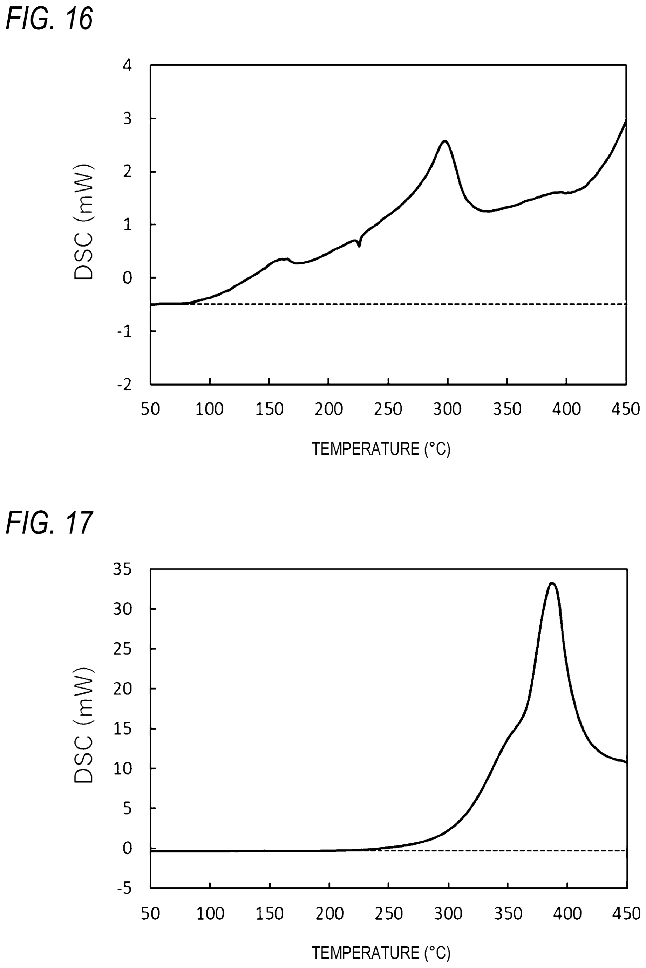

FIGS. 10 to 15 show the DSC measurement results for the electrode materials in Examples 1 to 6, and FIGS. 16 and 17 show the DSC measurement results for the electrode materials in Comparative Examples 1 and 2. In each drawing, the solid line shown in the drawing is a DSC curve, and when the curve shifts upward, it means that the electrode material self-generates heat. Note that, the dotted line in the drawing is a reference line indicating a DSC value at 50°C. As is clear from FIGS. 10 to 17, Examples 1 to 6 are powder electrode materials less likely to generate heat than Comparative Example 1 and Comparative Example 2. Specifically, in Examples 1 to 6 in which the granulated body is formed using an aluminum phosphate, since a total heat generation amount of the electrode material is low and the heat generation starting temperature is high, it is suggested that the aluminum phosphate has an effect of improving the thermal stability of the electrode material.

Note that, in Comparative Example 2, the heat generation starting temperature is higher than that in Comparative Example 1, but a large heat generation reaction is observed at 270°C or higher. On the other hand, in Examples 1 to 6, no large heat generation reaction as in Comparative Example 2 is observed.

### [3] Sample Preparation 2

### [Electrode Preparation]

Electrodes using the electrode materials in Examples 1 to 6 and Comparative Examples 1 and 2 were prepared. The electrode was prepared by applying, to a nickel-plated steel foil (Super Nickel, thickness: 10 µm, manufactured by NIPPON STEEL CORPORATION) as a current collector, a slurry composed of 90 mass% of the electrode material, 3 mass% of acetylene black (Denka Black manufactured by Denka Company Limited), 1 mass% of a vapor-grown carbon fiber (VGCF-H manufactured by Showa Denko K.K.), and 6 mass% of a polyimide (UPIA-LB1001 manufactured by UBE Corporation), followed by vacuum drying (300°C, 12 hours). The reversible capacity per unit area was 3 mAh/cm². Note that, the slurry was prepared by mixing under conditions at 2000 rpm for 6 minutes in the atmosphere using a planetary centrifugal mixer (Awatori Rentaro ARE-310, manufactured by THINKY Corporation).

### [Battery Preparation]

A coin-type battery (R2032) was prepared using each of the electrodes obtained above using the electrode materials in Examples 1 to 6 and Comparative Examples 1 and 2 as a test electrode and using a metal lithium counter electrode (a lithium foil having a thickness of 500 µm, manufactured by Honjo Metal Co., Ltd.), a PP/PE/PP three-layer microporous membrane (2325 manufacture by Celgard), a glass filter (GA100 manufactured by ADVANTEC CO. LTD.), and a non-aqueous electrolytic solution. The non-aqueous electrolytic solution used was a solution in which LiPF₆ was dissolved at a concentration of 1 mol/L in a solvent obtained by adding 1 mass% of fluoroethylene carbonate (FEC) to a mixed liquid of ethylene carbonate (EC): diethyl carbonate (DEC) = 1:1 (volume ratio). Note that, the battery was prepared in a dry booth (NS dry booth, dew point: -80°C, manufactured by Nihon Spindle Manufacturing Co., Ltd.).

### [4] Evaluation Method and Evaluation Result 2

### [Charging and Discharging Cycle Characteristics]

A charging and discharging test was performed on the battery including each of the test electrode using the electrode materials in Examples 1 to 6 and Comparative Examples 1 and 2. The charging and discharging cycle test was performed under the conditions of repeating charging and discharging at a cutoff voltage of 0.001 V to 1.5 V and a rate of 0.1 C in a 30°C environment.

Table 2 shows the measurement results of the discharge capacity and a capacity retention rate in the first cycle and the 60th cycle as the cycle characteristics of each test electrode. Note that, the discharge capacity was determined as a value obtained by dividing the electric capacity of the electrode obtained during discharging by the mass of the electrode material. The capacity retention rate indicates a relative discharge capacity based on the discharge capacity in the first cycle (100%).

**[Table 2]**

| Test electrode | Discharge capacity (mAh/g) | | Capacity retention rate (%) | |
|---|---|---|---|---|
| | First cycle | 60th cycle | First cycle | 60th cycle |
| Example 1 | 1428.1 | 1142.7 | 100 | 80.0 |
| Example 2 | 1487.6 | 1277.7 | 100 | 85.9 |
| Example 3 | 1421.1 | 1209.1 | 100 | 85.1 |
| Example 4 | 1400.4 | 1179.1 | 100 | 84.2 |
| Example 5 | 1455.6 | 1140.1 | 100 | 78.3 |
| Example 6 | 1537.9 | 1223.9 | 100 | 79.6 |
| Comparative Example 1 | 1482.2 | 1169.6 | 100 | 78.9 |
| Comparative Example 2 | 1664.6 | 1274.7 | 100 | 76.6 |

In Comparative Example 2, since the electrode material dose not contain the granulation binder and the granulation conductive additive, the initial discharge capacity is as large as 1664.6 mAh/g, but the discharge capacity at the 60th cycle is smaller than the initial discharge capacity, and the capacity retention rate is as small as 76.6%. On the other hand, in Examples 1 to 6 and Comparative Example 1 in which the spherical granulated body is formed using the granulation binder and the granulation conductive additive, the initial discharge capacity is smaller than that in Comparative Example 2, but the capacity retention rate is larger than that in Comparative Example 2.

### [High-rate Discharging Characteristics]

A high-rate discharging test was performed on the battery including each of the test electrode using the electrode materials in Examples 1 to 6 and Comparative Examples 1 and 2. The high-rate discharging test was performed under the conditions of repeating 5 cycles of charging and discharging at a cutoff voltage of 0.001 V to 1.5 V and a rate of 0.1 C in a 30°C environment, and then performing discharging at each rate of 0.2 C, 0.5 C, 1 C, and 3 C.

Table 3 shows the electrode capacity obtained at each discharging rate based on the discharge capacity at a rate of 0.1 C for each test electrode.

**[Table 3]**

| Test electrode | Discharge capacity (%, based on discharge capacity at rate of 0.1 C) | | | |
|---|---|---|---|---|
| | Rate of 0.2 C | Rate of 0.5 C | Rate of 1 C | Rate of 3 C |
| Example 1 | 96.77 | 93.14 | 90.61 | 89.78 |
| Example 2 | 96.77 | 92.40 | 88.62 | 86.18 |
| Example 3 | 97.14 | 96.40 | 96.08 | 88.17 |
| Example 4 | 96.87 | 94.98 | 94.43 | 88.37 |
| Example 5 | 96.71 | 94.55 | 94.19 | 93.19 |
| Example 6 | 96.82 | 95.06 | 94.56 | 89.59 |
| Comparative Example 1 | 96.95 | 93.81 | 91.47 | 84.28 |
| Comparative Example 2 | 97.69 | 96.06 | 94.56 | 82.21 |

According to Table 3, at a low rate of 0.5 C or less, the samples exhibit almost the same discharge capacity. However, in the discharging at a rate of 3 C, it is found that the discharge capacity is larger in Examples 1 to 6 using an aluminum phosphate as the granulation binder than that in Comparative Examples 1 and 2.

### [5] Examination of Composition of Active Material

Further, an electrode material was prepared by changing the composition of the Si alloy as the active material, and the characteristics were evaluated.

### [Sample Preparation]

Electrode materials according to Examples 7 to 14 were prepared in the same manner as in the above item [1]. In the preparation of the Si alloy, an alloy composition in a molten alloy used as a raw material in a gas atomization method was as shown in the left column in Table 4 below. The powder obtained by the gas atomization method was pulverized by using a bead mill to obtain a Si alloy powder containing Si particles, Si₂Fe compound particles, and SnCu compound particles. Compound proportions in the obtained alloy powder, that is, proportions of a Si phase, a Si₂Fe phase, and a SnCu compound phase were as shown in the right column in Table 4 below.

The compound proportion is determined by calculation with reference to results of X-ray diffraction (XRD) measurement. The method of calculating the compound proportion is described by taking the case of Example 7 as an example. (1) First, a composition phase in the alloy powder is checked by XRD analysis. In the case of Example 7, a Si phase, a Si₂Fe phase as a SiX compound phase, and a SnCu phase (Sn₅Cu₆) as a YCu compound phase were observed. (2) Next, assuming that all the elements X contained in the alloy composition constitute the SiX compound phase observed in (1), the mass proportion of the SiX compound phase in the alloy powder is determined based on a mass ratio of Si and the element X in the SiX compound phase. The mass ratio of Si and Fe in the Si₂Fe phase is Si:Fe = 50.1:49.9. In the alloy composition of Example 7, the content of Fe is 44.6 mass%, and the amount of Si constituting the Si₂Fe phase with Fe is 44.6×50.1/49.9 = 44.8 mass%. The compound proportion of the SiX compound phase composed of Si₂Fe is a total mass of Si and Fe constituting Si₂Fe, and in the case of Example 7, it is 44.6+44.8 = 89.4 mass%. (3) Further, the compound proportion of the Si phase is determined by subtracting the amount of Si constituting the SiX compound phase determined in (2) from the content of Si in the alloy composition. In the case of Example 7, the compound proportion of the Si phase is 54.9-44.8 = 10.1 mass%. Finally, the compound proportion of the YCu compound phase is determined as a total content of the element Y and Cu in the alloy composition. In the case of Example 7, the compound proportion of the SnCu phase is 0.3+0.2 = 0.5 mass%.

**[Table 4]**

| Active material | Alloy composition (mass%) | | | | Compound proportion (mass%) | | |
|---|---|---|---|---|---|---|---|
| | Si | Fe | Sn | Cu | Si phase | Si₂Fe phase | SnCu phase |
| Example 7 | 54.9 | 44.6 | 0.3 | 0.2 | 10.1 | 89.4 | 0.5 |
| Example 8 | 64.9 | 34.6 | 0.3 | 0.2 | 30.2 | 69.3 | 0.5 |
| Example 9 | 72.4 | 27.1 | 0.3 | 0.2 | 45.2 | 54.3 | 0.5 |
| Example 10 | 79.8 | 19.7 | 0.3 | 0.2 | 60.0 | 39.5 | 0.5 |
| Example 11 | 83.3 | 16.2 | 0.3 | 0.2 | 67.0 | 32.5 | 0.5 |
| Example 12 | 87.3 | 12.2 | 0.3 | 0.2 | 75.1 | 24.4 | 0.5 |
| Example 13 | 91.8 | 7.7 | 0.3 | 0.2 | 84.1 | 15.4 | 0.5 |
| Example 14 | 95.8 | 3.7 | 0.3 | 0.2 | 92.1 | 7.4 | 0.5 |

In the sample preparation, the steps after the preparation of the Si alloy were performed in the same manner as in Example 1. The composition of the mixed liquid for spray drying was also the same as in Example 1 except for the composition of the Si alloy powder, and a granulated body having the composition shown in Table 5 below was obtained as an electrode material. Further, a carbon film was formed on the surface of the obtained granulated body by using a thermal CVD method. In the thermal CVD method, an acetylene gas as an organic gas was supplied into a furnace while the granulated body was held in the furnace at 700°C for 1 hour.

### [Evaluation of Flame Resistance]

The flame resistance of each of the obtained electrode materials was evaluated in the same manner as in the evaluation of the above item [2]. Table 5 below shows the evaluation results for the flame resistance together with the composition of the granulated body.

**[Table 5]**

| Electrode material | Composition (mass%) of granulated body | | | | Evaluation result for flame resistance |
|---|---|---|---|---|---|
| | Si alloy | Aluminum phosphate Al₂O₃·3P₂O₅ | Polyimide PI | Carbon black CB | |
| Example 7 | 93 | 5 | - | 2 | B |
| Example 8 | 93 | 5 | - | 2 | B |
| Example 9 | 93 | 5 | - | 2 | B |
| Example 10 | 93 | 5 | - | 2 | B |
| Example 11 | 93 | 5 | - | 2 | B |
| Example 12 | 93 | 5 | - | 2 | B |
| Example 13 | 93 | 5 | - | 2 | B |
| Example 14 | 93 | 5 | - | 2 | B |

According to Table 5, in all of Examples 7 to 14, high flame resistance evaluated as "B" is obtained as in Example 1. From this, it is found that when the granulated body contains a predetermined amount of the inorganic binder containing a phosphate as a component, high flame resistance is obtained even when the composition of the Si-based material constituting the active material changes.

### [Evaluation of Charge and Discharging characteristics and High-rate Discharging Characteristics]

Using each electrode material in Examples 7 to 14, an electrode and a battery were prepared in the same manner as in the item above [3]. Then, the charge and discharging cycle characteristics and the high-rate discharging characteristics were evaluated in the same manner as in the above item [4]. The evaluation results for the charge and discharging cycle characteristics are shown in Table 6 below, and the evaluation results for the high-rate discharging characteristics are shown in Table 7 below.

**[Table 6]**

| Test electrode | Discharge capacity (mAh/g) | | Capacity retention rate (%) | |
|---|---|---|---|---|
| | First cycle | 60th cycle | First cycle | 60th cycle |
| Example 7 | 372.1 | 365.0 | 100 | 98.1 |
| Example 8 | 850.4 | 810.4 | 100 | 95.3 |
| Example 9 | 1132.0 | 1042.6 | 100 | 92.1 |
| Example 10 | 1806.7 | 1598.9 | 100 | 88.5 |
| Example 11 | 2005.3 | 1750.6 | 100 | 87.3 |
| Example 12 | 2227.2 | 1902.0 | 100 | 85.4 |
| Example 13 | 2506.3 | 2082.7 | 100 | 83.1 |
| Example 14 | 2983.1 | 2422.3 | 100 | 81.2 |

**[Table 7]**

| Test electrode | Discharge capacity (%, based on discharge capacity at rate of 0.1 C) | | | |
|---|---|---|---|---|
| | Rate of 0.2 C | Rate of 0.5 C | Rate of 1 C | Rate of 3 C |
| Example 7 | 97.32 | 97.03 | 95.23 | 88.42 |
| Example 8 | 99.03 | 98.45 | 96.88 | 90.32 |
| Example 9 | 97.45 | 97.11 | 95.49 | 89.01 |
| Example 10 | 97.01 | 96.74 | 94.59 | 85.39 |
| Example 11 | 96.43 | 96.01 | 92.71 | 83.84 |
| Example 12 | 96.33 | 95.88 | 90.55 | 81.76 |
| Example 13 | 96.01 | 95.32 | 89.83 | 80.42 |
| Example 14 | 95.58 | 95.07 | 88.43 | 78.48 |

According to Table 6, in any of the samples, a high capacity retention rate of more than 80% is obtained at the 60th cycle, and it is shown that the samples have high cycle characteristics. In particular, in Examples 7 to 13 in which the content proportion of the Si phase is in the range of 10% to 90% and the content proportion of the Si₂Fe phase is in the range of 5% to 90%, the capacity retention rate is 83% or more. In the results of the discharging characteristics in Table 7, Examples 7 to 13 also exhibit high discharging characteristics in which the discharge capacity at a rate of 3 C is 80% or more. Further, in Examples 8 and 9 in which the content proportion of the Si phase is in the range of 20% to 50% and the content proportion of the Si₂Fe phase is in the range of 30% to 85%, large values are obtained in a well-balanced manner for the capacity retention rate at the 60th cycle in Table 6 and the discharge capacity at a rate of 3 C in Table 7, and it can be said that both the cycle characteristics and the discharging characteristics are excellent. In particular, in Example 8, the capacity retention rate at the 60th cycle takes the second largest value and the discharge capacity at a rate of 3 C takes the largest value in Examples 7 to 14, so that both the cycle characteristics and the discharging characteristics are highly achieved.

Although the preferred embodiments and examples of the present invention have been described above, various additions, modifications, or deletions can be made without departing from the spirit of the present invention. Therefore, such modifications are also included in the scope of the present invention. In addition, in the present specification, the numbers described in the general formulae of the compounds may be expressed simply as integers, but are numbers satisfying electrical neutrality, and when they are substantially the same, they are included in the scope of the present invention.

The present application is based on Japanese Patent Applications No. 2024-233217 filed on December 29, 2024 and No. 2025-163573 filed on September 30, 2025, and the contents thereof are incorporated herein by reference.

### REFERENCE SIGNS LIST

- 1: Inorganic binder
- 2: Active material
- 3: Granulated body
- 4: Inorganic binder aqueous solution
- 5: Organic solvent
- 6: Suspension liquid
- 7: Mixed liquid

## Claims

1. A method for producing an electrode material, which is a non-aqueous electrolyte secondary battery electrode material, the method comprising a granulation step that comprises:
obtaining a mixed liquid (7) by mixing an inorganic binder aqueous solution (4) containing an inorganic binder (1) that contains a phosphate as a component, and a suspension liquid (6) in which an active material (2) is dispersed in an organic solvent (5);
subjecting the mixed liquid (7) to a heat treatment to vaporize water in the mixed liquid;
obtaining a granulated body (3) containing the inorganic binder (1) and the active material (2), wherein
the inorganic binder aqueous solution (4) has a solid content concentration of 1 mass% or more and 30 mass% or less.

2. The method for producing an electrode material according to claim 1, wherein the phosphate comprises an aluminum phosphate represented by a condensed formula Al₂O₃·nP₂O₃·mH₂O (0.5 ≤ n ≤ 4 and 0 ≤ m ≤ 8).

3. The method for producing an electrode material according to claim 1 or 2, wherein
the suspension liquid (6) has a solid content concentration of 1 mass% or more and 30 mass% or less,
the suspension liquid (6) further contains water, and
a concentration of water with respect to the organic solvent (5) in the suspension liquid (6) is 10 mass% or more.

4. The method for producing an electrode material according to any one of claims 1 to 3, wherein the organic solvent (5) is a water-soluble organic solvent.

5. The method for producing an electrode material according to claim 4, wherein the water-soluble organic solvent (5) is an alcohol-based organic solvent.

6. The method for producing an electrode material according to any one of claims 1 to 5, wherein the mixed liquid (7) is subjected to the heat treatment under a condition of 100°C or higher and 500°C or lower.

7. The method for producing an electrode material according to any one of claims 1 to 6, wherein the active material (2) contains single particles having a median diameter, D₅₀, of 10 nm or more and 1 µm or less.

8. The method for producing an electrode material according to any one of claims 1 to 7, wherein the active material (2) contains a material capable of forming an alloy phase with an alkali metal, wherein in particular the material capable of forming the alloy phase with the alkali metal is a Si-based material.

9. The method for producing an electrode material according to any one of claims 1 to 8, wherein the mixed liquid (7) further contains carbon.

10. The method for producing an electrode material according to any one of claims 1 to 9, wherein the granulated body (3) is spherical and has a median diameter, D₅₀, of 0.5 µm or more and 50 µm or less.

11. The method for producing an electrode material according to any one of claims 1 to 10, wherein the heat treatment comprises a spray drying method.

12. An electrode material, which is a non-aqueous electrolyte secondary battery electrode material, wherein
the electrode material is a granulated body (3) containing an active material (2) and an inorganic binder (1) that contains a phosphate as a component, and
the inorganic binder (1) is contained in an amount of 1 mass% or more and 30 mass% or less.

13. The electrode material according to claim 12, wherein the phosphate contains an aluminum phosphate represented by a condensed formula Al₂O₃·nP₂O₅·mH₂O (0.5 ≤ n ≤ 4 and 0 ≤ m ≤ 8).

14. The electrode material according to claim 12 or 13, wherein the active material (2) contains a Si-based material, wherein the Si-based material in particular contains Si particles and SiX compound particles, where X is at least one element selected from Fe, Co, Ni, Zr, Ti, Cr, V, and Nb, wherein further in particular in the active material, a mass proportion of the Si particles is 10% or more and 90% or less, and a mass proportion of the SiX compound particles is 5% or more and 90% or less, wherein still further, the mass proportion of the Si particles in the active material is 20% or more and 50% or less, and the mass proportion of the SiX compound particles is 30% or more and 85% or less.

15. The electrode material according to claim 14, wherein the Si-based material further contains YCu compound particles, where Y is at least one element selected from Sn, Al, In, and Bi.
